# EUROPÄISCHE PATENTSCHRIFT

(11) **EP 2 990 777 B1**
(45) Veröffentlichungstag und Bekanntmachung des Hinweises auf die Patenterteilung: **07.08.2019**
(21) Anmeldenummer: 15181496.9
(22) Anmeldetag: 19.08.2015
(51) Int. Cl.: G01N 11/08, G01F 22/02, G01F 23/18, G01N 11/00

(54) **VORRICHTUNG UND VERFAHREN ZUR ERFASSUNG VON EIGENSCHAFTEN ODER DES FÜLLSTANDS EINES MEDIUMS IN EINEM BEHÄLTER**
DEVICE AND METHOD FOR DETECTING PROPERTIES OR THE FILLING LEVEL OF A MEDIUM IN A VESSEL
DISPOSITIF ET PROCÉDÉ DE DÉTECTION DE PROPRIÉTÉS OU D'UN NIVEAU DE REMPLISSAGE D'UN MILIEU DANS UN RÉCIPIENT

(30) Priorität: 27.08.2014 DE 202014104019 U
(43) Veröffentlichungstag der Anmeldung: 02.03.2016
(73) Patentinhaber: Seuffer GmbH & Co. KG, 75365 Calw-Hirsau (DE)
(72) Erfinder: Greisiger, Patrick, 75365 Calw-Hirsau (DE)
(74) Vertreter: Winter, Brandl, Fürniss, Hübner, Röss, Kaiser, Polte - Partnerschaft mbB

(56) Entgegenhaltungen:
- DE-A1- 4 203 099
- DE-A1- 19 648 688
- DE-A1- 19 750 620
- JP-A- 2001 240 200
- US-A1- 2006 053 900

## Beschreibung

Die vorliegende Erfindung betrifft eine Erfassungsvorrichtung und ein Erfassungsverfahren zur Erfassung von Eigenschaften eines strömenden Mediums, und insbesondere eine Erfassungsvorrichtung und ein Erfassungsverfahren zur Erfassung von Eigenschaften eines viskosen Mediums sowie des Füllstands des Mediums in einem Behälter.

Vorrichtungen und Verfahren zur Erfassung von Materialeigenschaften, und beispielsweise zur Erfassung von Materialeigenschaften eines Mediums oder auch zur Erfassung eines Füllstands eines Mediums in einem Behälter sind aus dem Stand der Technik bekannt. Siehe zum Beispiel US 2006/053900 A1, DE 196 48 688 A1, DE 42 03 099 A1 und DE 197 50 620 A1.

Die Druckschrift EP 2 533 035 A1 offenbart eine Vorrichtung und ein zugehöriges Verfahren zur Erfassung von Materialeigenschaften, wobei eine Messeinrichtung eine Sensoreinrichtung aufweist, die mit dem Medium direkt in Verbindung steht und die entsprechend angesteuert wird, so dass mittels Impedanzspektroskopie eine Information bezüglich allgemeiner oder spezieller Eigenschaften des Mediums erhalten wird. Die Ansteuerung der Messeinrichtung erfolgt in Verbindung mit vorbestimmten Frequenzbereichen zur Erfassung der Impedanz der Sensoreinrichtung mit dem Medium und Auswertung der Impedanzwerte.

Die Druckschrift DE 10 2007 059 853 A1 offenbart eine Vorrichtung zum Messen eines Füllstands einer Flüssigkeit in einem Behälter, wobei zur Bildung einer winkelförmigen Rohranordnung der Vorrichtung zwei Rohrstücke mittels eines Verbindungsstücks zusammengesetzt werden. Die Rohrstücke können zur Herstellung einer Strömungsverbindung mit dem umgebenden Medium einen Schlitz aufweisen. Die Füllstandsmessung erfolgt, indem auf der Basis von Ultraschallsignalen die Laufzeiten ausgesendeter und reflektierter Signale erfasst und ausgewertet werden. In Abhängigkeit von den ermittelten Laufzeiten können Laufwege der Ultraschallsignale und in Verbindung mit dem gesamten Volumen des Behälters jeweilige Füllstandswerte erhalten werden.

Eine gleichartige, auf der Erfassung von Laufzeiten von Ultraschallsignalen beruhende Bestimmung eines Füllstands ist aus der Druckschrift US 2005/284217 A1 bekannt. Die Erfassungseinrichtung weist eine winkelförmige Anordnung von Rohren auf und beinhaltet eine spezielle Reflektoreinrichtung mit einem vorbestimmten Abstand zur Quelle der Ultraschallsignale, so dass eine Referenzinformation erzeugt werden kann.

Ein ähnliches Konzept ist auch der Druckschrift WO 2007/118677 A1 entnehmbar, wobei ebenfalls eine winkelförmige Anordnung vorgesehen ist. Die Füllstandinformation wird über eine Auswertung der Laufzeitwerte der Ultraschallsignale mit einer zusätzlichen Temperaturkompensation erhalten.

Ferner offenbart die Druckschrift JP 2001/240200 A eine Einrichtung zur Erfassung des Füllstands in einem Behälter auf der Basis von ermittelten Druckwerten in einem Leitungssystem. Im Einzelnen ist in einer von dem Behälter mit dem zu erfassenden dünnflüssigen Medium wegführenden Leitung eine Einrichtung angeordnet, die zur Erfassung von Druckwerten geeignet ist, und es wird das Medium weitergeleitet zu einer Verbrauchsstelle, bei der eine Pumpe angeordnet ist. Der Drucksensor ist zwischen dem Tank oder Behälter mit dem Medium und der Pumpe angeordnet. Es erfolgt eine Druckerfassung, wobei immer positive Druckwerte aufgenommen werden und aus den Druckwerten auf den Füllstand des Behälters geschlossen wird. Die bekannte Vorgehensweise bewirkt eine Erfassung des Drucks im ungestörten Ruhezustand, wobei Druckschwankungen infolge des Betriebs der Pumpe verhindert werden. Die Einrichtung, in der der Drucksensor angeordnet ist und die vom Medium durchströmt wird, weist daher weitere mechanische Einrichtungen auf, mittels denen die unerwünschten Druckschwankungen am Drucksensor infolge des Betriebs der Pumpe abgemildert oder weitgehend verhindert werden. Es soll lediglich in den Betriebspausen der Pumpe bei einem störungsfrei andauernden statischen Zustand des Drucks gemessen werden. Messungen bleiben so auf spezielle Betriebszustände des Gesamtsystems beschränkt.

Bei den vorstehend beschriebenen bekannten Anordnungen und Einrichtungen zur Erfassung von Materialeigenschaften und des Füllstands einer bestimmten Substanz oder eines fluiden Mediums in einem Behälter ist es im Allgemeinen erforderlich, in den Behälter bestimmte Einrichtungen (Messeinrichtungen, Messelemente) einzusetzen oder den Behälter in spezieller Weise auszugestalten, so dass die erforderlichen Messungen, meist in Verbindung mit speziellen Messzyklen, möglich sind. Beispielsweise kann eine Sensoreinrichtung vorgesehen sein, die mittels eines beheizten Widerstands (PTC-Widerstand) eine Strömung eines Mediums erfasst, indem bei einer Strömung des Mediums eine Abkühlung des PTC-Widerstands und bei der selbstregelnden Eigenschaft des PTC-Widerstands eine Stromzunahme erkannt werden kann. Es kann auf diese Weise auch eine vollständige Entleerung des Behälters des Mediums bestimmt werden.

Derartige Verfahren und Einrichtungen erfordern im Allgemeinen einen größeren Aufwand, wobei immer zur Erfassung des Füllstands in den Behälter eine Einrichtung eingesetzt werden muss oder der Behälter eine spezielle Ausgestaltung mit besonderen Einrichtungen erfordert, so dass sich jeweils eine komplexe Ausführung des Behälters ergibt und einfach ausgeführte Behälter, wie beispielsweise Standardbehälter (meist unterschiedlicher Art) zur Bevorratung des Mediums, nicht oder nur mit weiteren Maßnahmen verwendet werden können. Somit ist die jeweilige Füllstandmessung einerseits mit einem größeren Aufwand und andererseits mit speziellen Einrichtungen verbunden, wobei ebenfalls zur Messung spezielle Messzeiten erforderlich sind. Auch ist beispielsweise die Erfassung des Füllstands eines viskosen Mediums in einem Behälter mittels eines Schwimmers auf mechanische Weise infolge des Verhaltens des viskosen Mediums nicht ausreichen genau und verlässlich.

Der vorliegenden Erfindung liegt demgegenüber die Aufgabe zugrunde, eine Erfassungsvorrichtung und ein Erfassungsverfahren zur Erfassung der Eigenschaften eines fluiden Mediums derart auszugestalten, dass Eigenschaften des Mediums einschließlich des Füllstands des Mediums in einem Behälter auf einfache Weise und genau erfasst werden können.

Erfindungsgemäß wird diese Aufgabe mit den in den beigefügten Patentansprüchen angegebenen Merkmalen gelöst.

Die vorliegende Erfindung betrifft somit eine Erfassungsvorrichtung zur Erfassung von Eigenschaften eines Mediums oder des Füllstands des Mediums in einem Behälter, mit einer von dem Medium durchströmten Sensoreinheit mit zumindest einem Drucksensor zur Erfassung von Druckwerten des Mediums in der Sensoreinheit und zur Abgabe eines Erfassungssignals, wobei die Sensoreinheit in ein Prozesssystem einsetzbar ist, in dem sich das Medium befindet, und das Prozesssystem zumindest den Behälter zur Aufnahme des Mediums sowie eine Pumpe aufweist zur Entnahme des Mediums aus dem Behälter, und wobei die Sensoreinheit zwischen dem Behälter und der Pumpe einsetzbar ist.

Alternativ betrifft die vorliegende Erfindung eine Erfassungsvorrichtung zur Erfassung von Eigenschaften eines Mediums oder des Füllstands des Mediums in einem Behälter, mit einer von dem Medium durchströmten Sensoreinheit mit zumindest einem Drucksensor zur Erfassung von Druckwerten des Mediums in der Sensoreinheit und zur Abgabe eines Erfassungssignals, und einer Pumpe zur Entnahme des Mediums aus dem Behälter, wobei die Erfassungsvorrichtung in ein Prozesssystem einsetzbar ist, in dem sich das Medium befindet, und das Prozesssystem zumindest den Behälter aufweist zur Aufnahme des Mediums, und wobei die Erfassungsvorrichtung in Bezug auf die Strömungsrichtung des Mediums im Prozesssystem stromab des Behälters angeordnet ist und sich die Sensoreinheit zwischen der Pumpe und dem Behälter befindet.

Das Verfahren zur Erfassung von Eigenschaften des Mediums oder des Füllstands des Mediums in dem Behälter, ausgehend von den vorstehend beschriebenen Vorrichtungen, umfasst folgende Schritte: Intermittierendes Betreiben der Pumpe mit einem Pumpenbetrieb und Betriebspausen (Schritt 1), Erfassen der Druckwerte des Mediums während des Pumpenbetriebs und in den Betriebspausen und Bereitstellen von Erfassungssignalen (Schritt 2), Bilden einer Druckkennlinie aus dem zeitlichen Verlauf der erfassten Druckwerte des Mediums in der Sensoreinheit (Schritt 3), und Auswerten der Druckkennlinien zur Bestimmung einer Information als Maß für den Füllstand des Mediums in dem Behälter aus den Druckwerten der jeweiligen Druckkennlinie während oder außerhalb des Betriebs der Pumpe (Schritt 4).

Mit den erfindungsgemäßen Anordnungen und dem Verfahren besteht die Möglichkeit, mit einer vergleichsweise einfachen Anordnung eine Information über die Eigenschaften des fluiden Mediums, und insbesondere des viskosen Mediums zu erhalten. Die erfindungsgemäße Anordnung in Verbindung mit dem Verfahren ermöglicht die Erfassung der Eigenschaften des Mediums oder des Füllstands des Mediums in einem zugehörigen Behälter (Vorratsbehälter) auf einfache und genaue Weise, ohne dass Einrichtungen in dem Behälter fest oder trennbar angeordnet werden und ohne dass der Behälter eine besondere Ausstattung benötigt. Vielmehr kann die gewünschte Information unabhängig von der Art des Behälters und seiner Ausstattung erhalten werden, wobei die Erfassungsvorrichtung nicht in dem Behälter angeordnet ist. Dies begünstigt die Verwendung einfacher Behälterformen ohne Sonderausstattung, so dass auch einfach ausgeführte Standardbehälter zur Bevorratung des Mediums verwendet werden können. Es ist lediglich erforderlich, dass eine Kenntnis über die Art und die Gestaltung des Behälters besteht und bei der Auswertung der erhaltenen Erfassungssignale berücksichtigt wird.

Die Information hinsichtlich beispielsweise der Viskosität des betreffenden Mediums oder des Füllstands des Mediums in dem Behälter kann in Verbindung mit einem laufenden bzw. intermittierenden Betrieb der Pumpe (Pumpenbetrieb) erhalten werden, wenn beispielsweise mittels einer entsprechenden Pumpe eine gewisse Menge des Mediums aus dem Behälter entnommen wird. Unabhängig von der Art des Behälters kann während des Pumpenbetriebs und während der Betriebspausen der Pumpe eine Information gewonnen werden hinsichtlich des sich während des Pumpenbetriebs ständig ändernden Füllstands des Behälters sowie bezüglich weiterer Eigenschaften des Mediums. Es ist nicht erforderlich, spezielle Messzyklen in zeitlicher oder technischer Hinsicht vorzusehen, da eine kontinuierliche Erfassung während des Pumpenbetriebs und außerhalb dessen und damit während des Entleerens des Behälters ohne zusätzlichen Aufwand möglich ist und gleichzeitig die Art des Behälters und seiner Ausführung keine Relevanz aufweist. Es ist lediglich erforderlich, dass der Behälter hinsichtlich seiner Abmessungen bekannt ist. Zusätzliche Einrichtungen oder Messzeiten werden nicht benötigt. Der Prozess, dem das betreffende Medium mittels des Betriebs der Pumpe zur weiteren Verarbeitung oder Benutzung zugeführt wird, wird nicht beeinträchtigt oder gestört. Es wird somit das Verfahren auf einfache Weise begleitend zur Entnahme des Mediums aus dem Behälter durchgeführt und erfordert zur Erfassung der erforderlichen Information bezüglich des Füllstands und anderer Parameter des Mediums keine zusätzlichen Einrichtungen oder Erfassungszeiten.

Im Ergebnis bedarf es somit bei der Anwendung der erfindungsgemäßen Anordnung und des Verfahrens weder zusätzlicher Messzyklen mit einem Zeitaufwand zur Durchführung der Messung und Auswertung, noch einer entsprechenden zusätzlichen Ausrüstung der Behälter zur Bevorratung des Mediums, so dass eine genaue Erfassung der Eigenschaften des Mediums und des Füllstands des Mediums in einem Behälter auf einfache Weise in technischer und zeitlicher Hinsicht sowie sehr kostengünstig gewährleistet ist. Demgegenüber erfordern die eingangs beschriebenen bekannten Erfassungseinrichtungen bezüglich Eigenschaften des Mediums oder des Füllstands des Behälters mit dem Medium sowohl zusätzliche Einrichtungen als auch bedarfsweise zusätzliche Erfassungszeiten sowie spezielle Bedingungen zur Erfassung von Messwerten.

Die Erfindung ist in den unabhängigen Patentansprüchen 1, 2 und 5 definiert. Weitere Ausgestaltungen der vorliegenden Erfindung sind in den zugehörigen Unteransprüchen angegeben.

Die Erfassungsvorrichtung weist eine Steuerungseinrichtung auf, die ausgebildet ist zur Aufnahme des Erfassungssignals der Sensoreinheit und zur Bildung von Druckkennlinien des ermittelnden Druckverlaufs in der Sensoreinheit.

Die Pumpe wird erfindungsgemäß zur Entnahme des Mediums aus dem Behälter intermittierend betrieben, und der ermittelte Druckverlauf umfasst Druckwerte des Mediums in der Sensoreinheit während des Betriebs der Pumpe und außerhalb des Betriebs der Pumpe.

Die Steuerungseinrichtung weist eine Einrichtung auf zur Auswertung des Druckverlaufs des Mediums innerhalb der Sensoreinheit, und zur Bestimmung einer Information als Maß für den Füllstand des Mediums in dem Behälter aus den Druckwerten des ermittelten Druckverlaufs während oder außerhalb des Betriebs der Pumpe.

Es kann die Sensoreinheit des Weiteren einen Temperatursensor aufweisen zur Erfassung der Temperatur des Mediums in der Sensoreinheit, und wobei das Medium ein viskoses Medium mit einer Viskosität größer als diejenige von Wasser ist, und es ist die Erfassungsvorrichtung in Leitungen des Prozesssystems einsetzbar.

Bei dem Verfahren kann der Schritt des Auswertens der Druckkennlinie das Bilden von Differenzen aus jeweiligen Druckwerten der Druckkennlinie während oder außerhalb des Betriebs der Pumpe umfassen.

Es kann bei dem Verfahren der Schritt des Auswertens der Druckkennlinie zur Bestimmung der Information als Maß für den Füllstand des Mediums im Behälter das Bilden von Differenzen aus jeweiligen Anfangs- und Enddruckwerten während oder außerhalb des Betriebs der Pumpe umfassen.

Ferner kann bei dem Verfahren der Schritt des Erfassens der Druckwerte des Mediums im Behälter durch die Sensoreinheit das kontinuierliche Erfassen der Druckwerte während und außerhalb des Betriebs der Pumpe umfassen.

Die Erfindung wird nachstehend anhand von Ausführungsbeispielen unter Bezugnahme auf die Zeichnung näher beschrieben. Es zeigen:
- Fig. 1: eine schematische Darstellung eines Prozesssystems in Verbindung mit der Erfassungsvorrichtung gemäß einem ersten Ausführungsbeispiel in der beispielhaften Anordnung zwischen einem Vorratsbehälter für das zu erfassende Medium und einem Prozess, in dem das Medium verwendet wird,
- Fig. 2: eine Anordnung einer Sensoreinheit an einer von dem zu erfassenden Medium durchströmten Leitung,
- Fig. 3: eine grafische Darstellung einer grundlegenden Kennlinie eines Druckverlaufs, die aus einem Erfassungssignal der Sensoreinheit während des Betriebs einer Pumpe zur Förderung des Mediums gebildet ist,
- Fig. 4: eine schematische Darstellung einer weiteren Kennlinie eines Druckverlaufs aus den Erfassungssignalen der Sensoreinheit mit weiteren Angaben zur Erfassung des Füllstands in einem Behälter und der Erfassung eines vollständig entleerten Zustands des Behälters,
- Fig. 5: eine schematische Darstellung eines Prozesssystems, wobei die Erfassungsvorrichtung gemäß einem zweiten Ausführungsbeispiel als ein Modul mit mehreren Komponenten ausgebildet ist, und
- Fig. 6: eine vereinfachte und schematische Darstellung der Anordnung der Sensoreinheit in einem von dem Medium durchströmten Leitungssystem, wobei die Sensoreinheit eine Mehrzahl von Sensorelementen oder Sensoreinrichtungen aufweist.

### Beschreibung bevorzugter Ausführungsbeispiele

### Erstes Ausführungsbeispiel

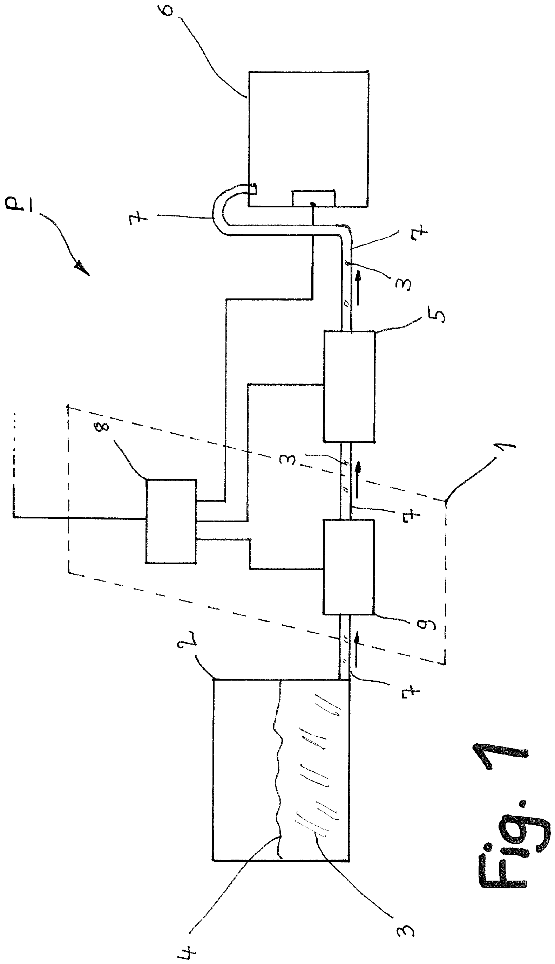

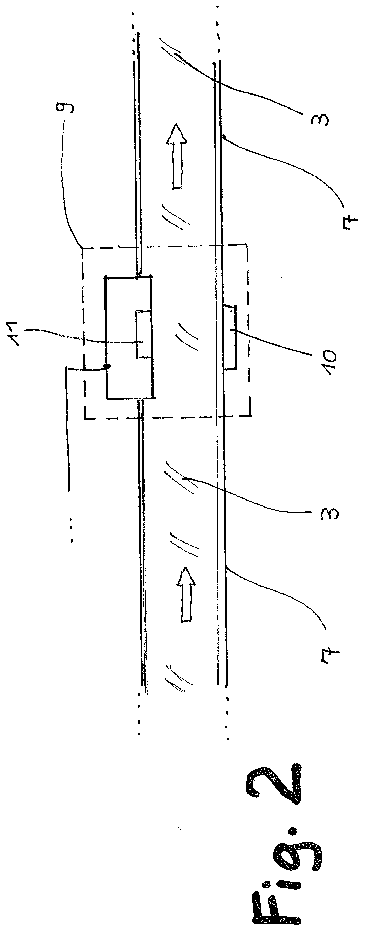

Die vorliegende Erfindung wird nachstehend anhand der Fig. 1 bis 4 beschrieben. Im Einzelnen wird in Verbindung mit der Darstellung in den Fig. 1 und 2 die Anordnung und der Aufbau der erfindungsgemäßen Erfassungsvorrichtung sowie ihre Einbindung in ein technisches Umfeld, beispielsweise in ein Prozesssystem P, im Einzelnen gemäß einem ersten Ausführungsbeispiel beschrieben.

Gemäß Fig. 1 ist die Erfassungsvorrichtung 1 in das Prozesssystem P eingesetzt und kann davon getrennt oder auch Teil des Prozesssystems P sein. Ausgehend von dem Prozesssystem P in ganz allgemeiner Form befindet sich in einem Behälter (beispielsweise einem Vorratsbehälter oder Tank) 2 ein Medium 3, das ein fluides Medium ist und vorzugsweise in Form eines viskosen Mediums vorliegt, wobei die Viskosität des Mediums 3 höher ist als diejenige von Wasser. Das Medium 3 bildet in dem Behälter 2 eine Füllstandhöhe 4, die bei Flüssigkeiten einem Flüssigkeitsspiegel entspricht.

Mittels der Erfassungsvorrichtung 1 werden physikalische Eigenschaften und teilweise chemische Eigenschaften des Mediums 3 ermittelt, und es kann ferner der Füllstand des Mediums 3 in dem Behälter 2 ermittelt werden. Ein momentaner Füllstand (entsprechend einem Flüssigkeitsspiegel) ist beispielhaft als ein aktueller Füllstand 4 bezeichnet. Die Erfassung erfolgt dabei während des laufenden Betriebs des Prozesssystems P.

Das Prozesssystem P weist ferner eine Pumpeneinrichtung 5 auf, die nachstehend vereinfacht als Pumpe 5 bezeichnet wird und die zum Fördern des Mediums 3 von dem Behälter 2 zu einem beliebigen Prozess 6 dient, der Teil des Prozesssystems P ist. Im Einzelnen ist die Erfassungsvorrichtung 1 im Hinblick auf die Strömungsrichtung des Mediums 3 zwischen einem Ausgang des Behälters 2 und einem Eingang der Pumpe 5 angeordnet. Zwischen dem Behälter 2 und der Erfassungsvorrichtung 1, zwischen der Erfassungsvorrichtung 1 und der Pumpe 5 und zwischen der Pumpe 5 und dem Prozess 6 sind jeweils Verbindungsleitungen angeordnet, in denen das Medium 3 strömen kann. Die Verbindungsleitungen werden nachstehend vereinfacht als Leitungen 7 bezeichnet. Im Allgemeinen sind während eines normalen, d. h. störungsfreien und speziell eines stationären Betriebs des Prozesssystems P die Leitungen 7 nahezu vollständig mit dem Medium 3 gefüllt. Die Leitungen 7 können als Rohre und/oder Schläuche zur Durchleitung des Mediums 3 ausgebildet sein.

Der Prozess 6 ist im Zusammenhang mit der vorliegenden Erfindung sehr allgemein zu verstehen. Es kann der Prozess 6 ein entsprechender physikalischer oder chemischer Prozess (beispielsweise im Rahmen einer Verfahrenstechnik) sein, der das Medium 3, das mittels der Pumpe 5 vom Behälter 2 zu dem Prozess 6 gefördert wird, in physikalischer und/oder chemischer Weise umwandelt oder in spezieller Form als einen Hilfsstoff verwendet. Es kann der Prozess 6 auch lediglich ein weiterer Behälter sein, in welchem die gewünschte Menge des Mediums 3 angeordnet oder gelagert wird. Hierbei kann der Prozess 6 auch ein entsprechender Verpackungsvorgang für das Medium 3 zum Einbringen des Mediums 3 in ein zum Verkauf geeignetes Gebinde sein. Die vorliegende Erfindung ist auf eine dieser nicht abschließend genannten Möglichkeiten nicht festgelegt.

Die vorliegende Erfindung kann somit angewendet werden in industriellen Einrichtungen, in denen das Medium 3 von einem ersten Behälter (entsprechend dem Behälter 2 in Fig. 1) in einem weiteren Behälter (entsprechend dem Prozess 6 in Fig. 1) umgefüllt wird oder dem Prozess 6 in Form von entsprechenden Vorgängen zugeführt wird. Dies betrifft insbesondere die Verpackungsindustrie oder die chemische Industrie. Des Weiteren kann die vorliegende Erfindung auch in Haushaltsgeräten Anwendung finden, wenn beispielsweise viskose Medien dem Prozess 6 zugeführt werden. In diesem Zusammenhang wird zur Vereinfachung der Darstellung die vorliegende Erfindung anhand von Wascheinrichtungen (Waschmaschinen) beschrieben, die in privaten Haushalten oder auch in der Industrie verwendet werden können.

Im Einzelnen erfolgt ohne Beschränkung hierauf die Beschreibung in Verbindung mit der Maßnahme, aus einem Waschmittelbehälter (entsprechend dem Behälter 2) innerhalb oder außerhalb der Wascheinrichtung ein viskoses Waschmittel dem Prozess 6 in Form des Waschvorgangs zuzuführen. Die Zuführung kann hierbei in gesteuerter oder geregelter Weise erfolgen, wobei entsprechende Zuführungsmengen an Waschmittel gesteuert oder geregelt werden können. Die vorliegende Erfindung ist nicht auf die Anwendung bei einer Wascheinrichtung festgelegt, vielmehr sind vielfältige Anwendungen in der vorstehend beschriebenen Weise denkbar.

Zur Steuerung der gesamten Vorgänge des Prozesssystems P weist die Erfassungsvorrichtung 1 eine Steuerungseinrichtung 8 auf, die in Fig. 1 auch als elektronische Datenverarbeitungseinrichtung EDV bezeichnet wird. Die Steuerungseinrichtung 8 umfasst elektronische Schaltungen und Computer-Einrichtungen zur Erfassung von Daten und auch zur Beeinflussung von Durchführung von Abläufen des Prozesssystems P, zur Steuerung oder Regelung bestimmter Maßnahmen de Erfassungsvorrichtung 1, zur Ansteuerung bestimmter Einrichtungen zur Durchführung dieser Maßnahmen und zur Aufnahme von Erfassungsergebnissen in Form von Daten. Diese Daten können ebenfalls gespeichert und für einen Benutzer zur Anzeige gebracht werden. Die Steuerungseinrichtung 8 kann ebenfalls mit einer weiteren zentralen (in den Figuren nicht gezeigten) Steuerungseinrichtung 8 verbunden werden und in vorbestimmter Weise von Befehlen dieser zentralen Steuerungseinrichtung 8 abhängig sein.

In der Darstellung gemäß Fig. 1 umfasst die Erfassungsvorrichtung 1 des Weiteren eine in die Leitungen 7 eingesetzte Sensoreinheit 9 zur Erfassung einer Mehrzahl physikalischer und im weiteren Sinne auch chemischer Eigenschaften des Mediums 3 sowie des Füllstands 4 des Mediums im Behälter 2. Die Sensoreinheit 9 als Teil der Erfassungsvorrichtung 1 befindet sich somit in Strömungsrichtung des Mediums 3 gesehen stromaufwärts der Pumpe 5 und somit zwischen der Pumpe 5 und dem Behälter 2. Wird durch die Pumpe 5 das Medium 3 gefördert und somit dem Behälter 2 entnommen und dem Prozess 6 zugeführt, dann strömt das Medium 3 aus dem Behälter 2 über die Leitung 7 zur Sensoreinheit 9, und nach dem Durchströmen der Sensoreinheit 9 über die Leitung 7 zur Pumpe 5 und von der Pumpe 5 über die Leitung 7 zu dem Prozess 6.

Die Steuerungseinrichtung 8 ist mit der Sensoreinheit 9, der Pumpe 5 sowie dem Prozess 6 in elektrischer Hinsicht in Bezug auf entsprechende Ansteuerungen und das Erfassen von Daten verbunden, so dass mit der Steuerungseinrichtung 8 in Abhängigkeit von einem vorbestimmten Computer-Programm im Wesentlichen die Sensoreinheit 9 und bedarfsweise auch die Pumpe 5 angesteuert werden. Mittels der Sensoreinheit 9 werden von in der Sensoreinheit 9 angeordneten und nachstehend noch beschriebenen Sensorelementen entsprechende Erfassungsdaten oder zu erfassende Parameter (kontinuierliche Erfassung sowie Einzelwerte) in Form von Erfassungssignalen aufgenommen und zur Steuerungseinrichtung 8 zur Auswertung und Speicherung übermittelt bzw. zur Auswertung bereitgestellt. In der Steuerungseinrichtung 8 können bei der Auswertung verwertbare Kennlinien (nachstehend als Druckkennlinien bezeichnet) aus den Erfassungssignalen gebildet werden.

Die Pumpe 5 weist bekannte Eigenschaften auf, wie die Förderleistung im Sinne einer geförderten Stoffmenge je Zeiteinheit, sowie die möglichen erzeugbaren Druckwerte (negativer oder positiver Druck), so dass in Verbindung mit einem entsprechenden Betrieb der Pumpe 5 bei der Verarbeitung der Erfassungssignale durch die Steuerungseinrichtung 8 zumindest ungefähr eine Information über die von der Pumpe 5 geförderte Stoffmenge des Mediums 3 berücksichtigt werden kann.

Fig. 2 zeigt eine detaillierte Darstellung der Sensoreinheit 9, wobei die Sensoreinheit 9 in allgemeiner Form eine Vielzahl von einzelnen Sensorelementen aufweisen kann. Die vorliegende Darstellung in Fig. 2 zeigt beispielhaft die Sensoreinheit 9 mit einem Temperatursensor 10 zur Erfassung der Temperatur des die Sensoreinheit 9 durchströmenden Mediums 3, d. h. zur Erfassung der Temperatur des Mediums 3 innerhalb der Sensoreinrichtung 9, sowie einen Drucksensor 11 zur Erfassung des Drucks des Mediums 3 innerhalb der Sensoreinheit 9, die eingesetzt ist zwischen die Leitungen 7 und vom Medium 3 durchströmt wird.

Wird durch einen Betrieb der Pumpe 5 gemäß Fig. 1 das Medium 3 aus dem Behälter 2 entnommen und strömt das Medium 3 über die Leitungen 7 durch die Sensoreinheit 9, dann werden mittels der genannten Sensorelemente (10, 11) die entsprechenden physikalischen Werte ermittelt. Mittels des Temperatursensors 10 wird die aktuelle im Bereich der Sensoreinheit 9 herrschende Temperatur des Mediums 3 ermittelt, und es wird der in Folge des Betriebs der Pumpe 5 (Pumpenbetrieb) ein sich vielfach ändernder Druck des Mediums 3 innerhalb der Sensoreinheit 9 (in der Umgebung oder auch in der Nähe des Drucksensors 11) erfasst. Entsprechende Daten in Form der Erfassungssignale werden der Steuerungseinrichtung 8 zur Auswertung Speicherung und/oder Anzeige zugeführt.

Zum Fördern des Mediums 3 wird die Pumpe 5 durch die Steuerungseinrichtung 8 oder die (nicht gezeigte) zentrale Steuerungseinrichtung des Prozesssystems P zeitweilig angesteuert. Während des Betriebs der Pumpe 5 wird das Medium 3 aus dem Behälter 2 entnommen und durchströmt die Leitungen 7 sowie die Sensoreinheit 9. Mit der Anordnung der Pumpe 5 stromab der Sensoreinheit 9 unter Berücksichtigung der in den Fig. 1 und 2 durch Pfeile angedeuteten Strömungsrichtung des Mediums 3 erzeugt die Pumpe 5 auf der Seite der Sensoreinheit 9 und des Behälters 2 einen Unterdruck, entsprechend dem das vorzugsweise viskose Medium 3 aus dem Behälter 2 in die Leitung 7 und durch die Sensoreinheit 9 strömt.

Die Strömungsgeschwindigkeit des Mediums 3 hängt ab von der Viskosität des Mediums 3 sowie der Temperatur des Mediums 3 und dem durch die Pumpe 5 aufgebrachten Unterdruck (negativer Druck). In Verbindung mit dem Betrieb der Pumpe 5 sowie entsprechenden Betriebspausen ergeben sich bei einer kontinuierlichen Erfassung des Drucks des Mediums 3 innerhalb der Sensoreinheit 9 in weitem Umfang wechselnde Druckverhältnisse (Druckwerte), wobei diese im Wesentlichen Werte eines Unterdrucks und damit negative Druckwerte ergeben. Die Druckwerte sind relativ zum Umgebungsdruck betrachtet.

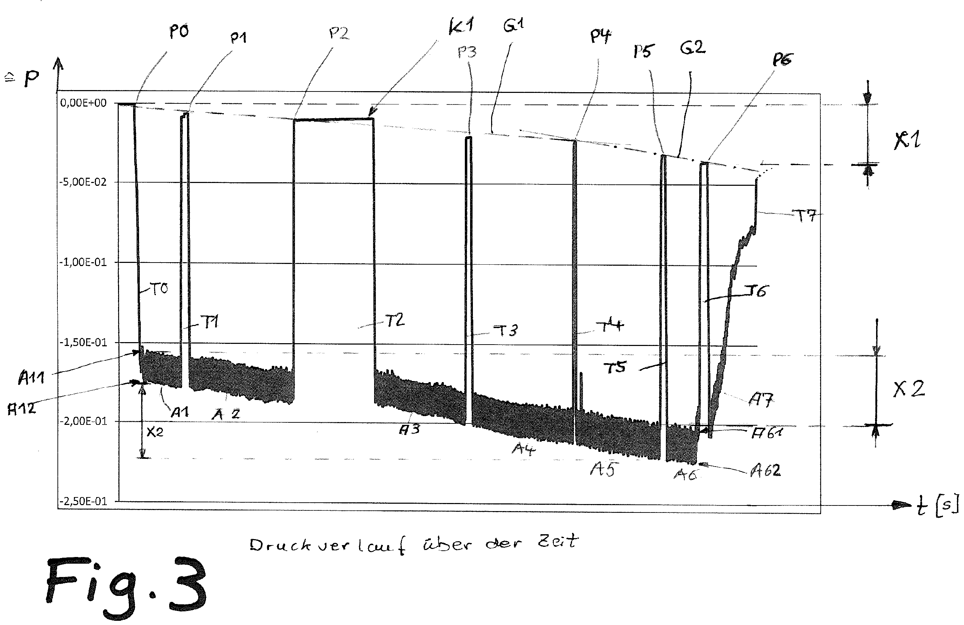

Fig. 3 zeigt in diesem Zusammenhang eine Druckkennlinie K1 als ein Druckverlauf über der Zeit oder eine Vielzahl von erfassten Druckwerten, wie sie beispielsweise von dem Drucksensor 11 in der Sensoreinheit 9 als Teil der Erfassungsvorrichtung 1 aufgenommen wurde. Die Druckkennlinie K1, die auch ein Maß für die Förderkennlinie der Pumpe 5 darstellt, zeigt in Fig. 3 Bereiche A1 bis A7 (Zeitbereich bzw. Zeitdauer), in denen die Pumpe 5 durch eine entsprechende Ansteuerung (beispielsweise mittels der Steuerungseinrichtung 8) betrieben wird und das Medium fördert. Während der Bereiche A1 bis A7 wird somit entsprechend der in den Fig. 1 und 2 angegebenen Strömungsrichtung das Medium 3 aus dem Behälter 2 über die Leitungen 7 durch die Sensoreinheit 9 zum Prozess 6 gefördert.

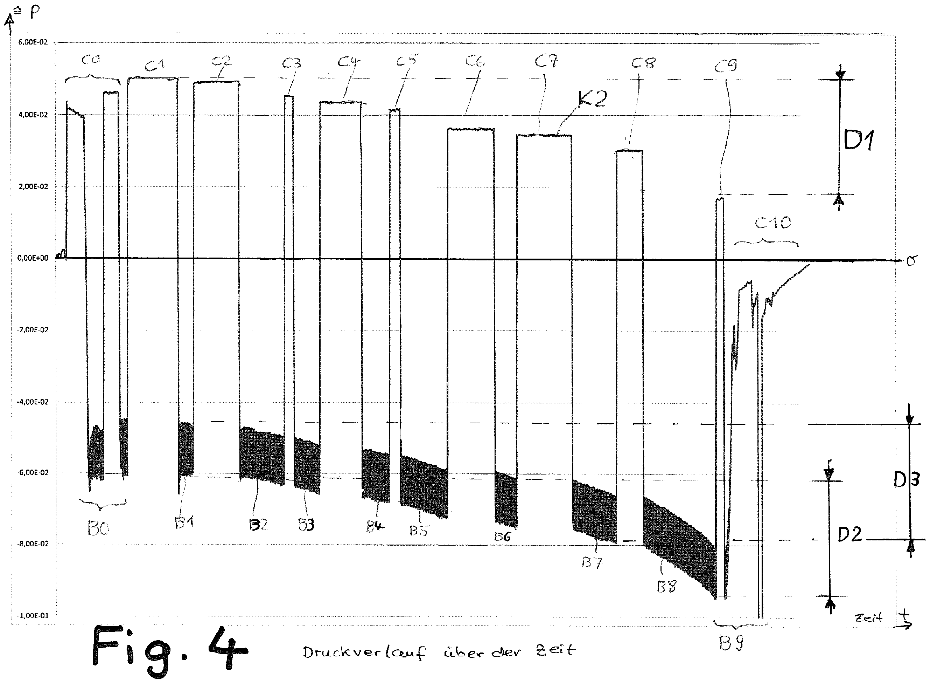

In Fig. 3 bezeichnet die horizontale Achse die Zeit und die vertikale Achse einen Druck in Druckeinheiten (Pascal P in N/m² oder bar) oder in umgerechneten Einheiten einer Höhe beispielsweise einer Wassersäule (z. B. Millimeter Wassersäule), wobei letztere Werte mittels eines Umrechnungsfaktors in äquivalente Druckwerte umgerechnet werden können. Die Kennlinie K1 gemäß Fig. 3 (und auch die zweite nachstehend noch beschriebene Kennlinie K2 gemäß Fig. 4) sind aus Messungen an einem Versuchsaufbau hervorgegangen.

Die Kennlinie K1 zeigt ferner Bereiche T1 bis T6 (Zeitbereiche, zeitliche Bereiche), in denen die Pumpe 5 nicht betrieben wird bzw. die die Betriebspausen der Pumpe 5 darstellen. Ab dem kurzen Zeitbereich T7 (auch Zeitpunkt) ist die Pumpe 5 in dem in Fig. 3 vereinfacht und schematisch dargestellten Beispiel des Betriebs der Pumpe 5 abgeschaltet.

Gemäß Fig. 3 und der Druckkennlinie K1 beginnt nach dem Zeitpunkt T0 während des zeitlichen Bereichs A1 der Betrieb der Pumpe 5. Ausgangspunkt für die Druckwerte ist der Druck P0 vor Beginn des Betriebs der Pumpe 5 im Bereich A1. Es ist dies der Anfangsdruck, der im Allgemeinen der äußere Luftdruck (vorzugsweise der Umgebungsdruck) ist und somit keinen Überdruck oder Unterdruck darstellt. Mit der Betriebspause im Bereich T1 nach dem ersten Bereich A1 ergibt sich der Druck P1, und nach dem weiteren Betrieb der Pumpe 5 im Bereich A2 ergibt sich während des Bereichs T2 der Druck P2. In gleichartiger Weise ergibt sich nach verschiedenen Betriebszeiten der Pumpe 5 während der Bereiche A3, A4, A5 und A6 in den jeweiligen Pausen T3 bis T6 die entsprechenden Druckwerte P3 bis P6 (P6 entspricht einem Endwert). Es wird dabei angenommen, dass in den Betriebspausen der Pumpe 5, d. h. in den Bereichen T1 bis T6 der erreichte und erfasste Druck annähernd konstant bleibt.

Es erfolgt somit ein Erfassung des Drucks (von Druckwerten) des Mediums 3 durch die Sensoreinheit 9 während und/oder außerhalb des Betriebs der Pumpe 5, vorzugsweise kontinuierlich.

Mit dem diskontinuierlichen bzw. intermittierenden Betrieb der Pumpe 5 mit aufeinanderfolgenden Zeiten des Betriebs der Pumpe 5 und Betriebspausen besteht die Möglichkeit, während der längeren oder auch kürzeren Betriebspausen der Pumpe 5 (Bereiche T1 bis T6), in denen die Pumpe 5 nicht angesteuert wird, eine Messung des Drucks, d.h. eine Druckerfassung durch den Drucksensor 11 durchzuführen, da in diesem Zustand das Medium 3 innerhalb der Leitungen 7 und der Sensoreinheit 9 in Ruhe ist und die Druckerfassung mittels des Drucksensors 11 damit nicht durch unerwünschte Schwingungen oder zufällig auftretende Druckschwankungen verfälscht oder unbrauchbar wird. Es kann somit auf einfache Weise während der auch kurzen Betriebspausen der Pumpe 5 (während der Zeiten oder Bereiche T1 bis T6) eine ungestörte und damit sehr verlässliche Druckerfassung mittels des Drucksensors 11 durchgeführt werden. In diesen Zeitbereichen gemäß der Druckkennlinie K1 in Fig. 3 kann der Drucksensor 11 genaue und damit verlässliche Druckwerte hinsichtlich des Drucks des Mediums 3 innerhalb der Sensoreinheit 9, und speziell des durch den Betrieb der Pumpe 5 gebildeten Unterdrucks (negative Druckwerte gemäß der Druckkennlinie von Fig. 3) erfassen.

Wird angenommen, dass der Behälter 2, aus dem das Medium 3 mittels des Betriebs der Pumpe 5 entnommen wird, zum Zeitpunkt T0 (oder auch einer kurzen Zeitdauer) vollständig gefüllt und zu einer kurzen Zeitdauer T6 nahezu vollständig entleert ist, dann ergibt sich zu einer kurzen Zeitdauer oder einem Zeitpunkt T7, dass das Medium 3 vollständig entnommen ist und damit der mittels der Pumpe 5 gebildete Unterdruck abnimmt und somit der Betrieb der Pumpe 5 abgebrochen wird. Ohne das Medium 3 in dem Behälter 2, den Leitungen 7 und der Sensoreinheit 9 (Strömungsabriss) kann lediglich ein geringer Unterdruck aufgebaut werden, da kein viskoses Medium 3 mehr gefördert werden kann und die Pumpe 5 im Wesentlichen Luft ansaugt, so dass der Unterdruck näher an den Wert Null (entsprechend dem äußeren Druck bzw. Umgebungsdruck) heran kommt. Dies ist in Fig. 3 nicht gezeigt, da die Messung abgebrochen wurde. Der weitere ungefähre Verlauf der Druckkennlinie ist lediglich gestrichelt angedeutet.

Die Darstellung in Fig. 3 zeigt die Druckwerte, und insbesondere negative Druckwerte über der Zeit, wobei in den zeitlichen Bereichen A1 bis A6 jeweils die Pumpe 5 betrieben wird. Es ist dies erkennbar an der zeitlich verdichteten Darstellung einzelner Pumpzyklen und damit in Verbindung stehender Druckschwankungen mit vorbestimmter Amplitude während der Bereiche A1 bis A6. Die Amplitude der durch die Pumpe 5 bedingten Druckschwankungen ist von der Viskosität des Mediums 3 abhängig, und um so größer, je größer die Viskosität ist. Während des Betriebs der Pumpe 5 entsteht zur Förderung des Mediums 3 ein erhöhter Unterdruck, so dass beispielsweise ein durchschnittlicher Unterdruckwert P1 im Bereich A1 betragsmäßig erheblich größer ist als der Ausgangsdruck P0 (Anfangsdruckwert). In gleicher Weise ist der über den Bereich A2 (d. h. während dieser Zeitdauer) ungefähr definierte Unterdruck betragsmäßig größer als der Unterdruck P1 während der Pause des Betriebs der Pumpe 5 zwischen den Bereichen A1 und A2. Mit jedem Betrieb der Pumpe 5 in den Bereichen A1 bis A6 nach einer betreffenden mehr oder weniger kurzen Betriebspause beginnt der Druckwert bzw. der Wert des Unterdrucks (negativer Druck) auf einem betragsmäßig höheren Wert, und wird hinsichtlich des Betrags nach weiteren Betriebszyklen der Pumpe 5 weiter erhöht (in der Druckkennlinie mit der Darstellungen des Druckverlaufs über der Zeit gemäß Fig. 3 und vorzeichenrichtig abfallend).

Es ist somit hinsichtlich der jeweiligen negativen Druckwerte während der Betriebszyklen der Pumpe 5 (Bereiche A1 bis A6) und der Betriebspausen (Bereiche bzw. Zeiten T1 bis T6) stufenweise eine Zunahme des negativen Drucks (des Unterdrucks) aus der Druckkennlinie K1 gemäß Fig. 3 erkennbar. Die stufenweise Zunahme des Betrags des negativen Drucks oder Unterdrucks stellt ein Maß für den Füllstand des Mediums 3 in dem Behälter 2 vor der Entnahme, während der Entnahme aus dem Behälter 2 und danach (weitgehende oder vollständige Entleerung) dar, so dass bei einem bekannten Behälter, d.h. bei bekannten Dimensionen (auch Formgestaltung) und Füllmengen des Behälters 2, aus dem das Medium 3 entnommen wird, auf den Füllstand 4 des Mediums 3 in dem Behälter 2 während der Entnahme geschlossen werden kann.

Dies ist ebenfalls in Fig. 3 gezeigt. Die Ausgangsgröße bei der Annahme eines vollständig mit dem Medium 3 gefüllten Behälters 2 führt zu dem ersten Druckwert P0 vor Beginn des ersten Bereichs A1 des Betriebs der Pumpe 5 (im Allgemeinen der Umgebungsdruck). Die weiteren Druckwerte P1 bis P6 des ermittelten Druckverlaufs in den jeweiligen Betriebspausen der Pumpe 5 (Bereiche T1 bis T6) zeigen in Fig. 3 eine abfallende Tendenz und damit eine betragsmäßige Zunahme des negativen Drucks (Unterdruck), wobei im Zustand kurz vor einer vollständigen Entleerung des Behälters 2 der Druckwert bei P6 durch den Drucksensor 11 erfasst wird. Es sei der erste erfasste Druckwert P0 ein Anfangsdruckwert und der letzte erfasste Druckwert, beispielsweise der Druckwert P6 ein Enddruckwert.

Da danach erfasste Druckwerte in Richtung des Werts Null tendieren, stellt der Druckwert bei P6 den letzten Druckwert des negativen Drucks (Unterdruck) in der Sensoreinheit 9 im Zusammenhang mit der Förderung des Mediums 3 dar, so dass bei der Auswertung der Erfassungssignale auf der Basis eines Unterschieds zwischen dem Druckwert P0 und dem Druckwert P6 (d. h. zwischen dem Anfangsdruckwert und dem Enddruckwert) eine Differenz X1 gebildet wird, die ein Maß für den Füllstand 4 des Behälters 2 darstellt. Mit der Kenntnis der Art des Behälters 2 und insbesondere seiner Form zur Aufnahme des Mediums 3 können auch Zwischenwerte des Drucks (beispielsweise die Werte P2 und P3) zur Bestimmung eines zwischen einem vollständig gefüllten und einem vollständig entleerten Behälter 2 liegenden Füllstand bestimmt werden. Die Differenz X1 stellt somit eine erste Differenz dar und wird gebildet aus den Druckwerten P0 und P6 in den Betriebspausen der Pumpe 5 (Bereiche T1 bis T6) sowie dem Anfangswert P0 des Drucks vor dem Betrieb der Pumpe 5 (d. h. zwischen dem Anfangsdruckwert P0 und dem Enddruckwert P6).

In gleicher Weise kann eine zweite Differenz X2 gebildet werden aus den Druckwerten jeweils zu Beginn und Ende der gesamten Betriebsbereiche der Pumpe 5 (d. h. Bereiche A1 bis A6, in denen die Pumpe 5 betrieben wird). Wird zu Beginn des Bereichs A1 ein oberer Wert A11 oder ein unterer Wert A12 betrachtet und werden diese Werte jeweils mit einem oberen Wert A61 oder dem entsprechenden unteren Wert A62 verglichen, dann kann ebenfalls zwischen den Werten A11 und A61 sowie den Werten A12 und A62 (d. h. zwischen dem zugehörigen Anfangsdruckwert und dem Enddruckwert) bei Berücksichtigung der jeweiligen zu diesem Zeitpunkt herrschenden Druckverhältnisse eine zweite Differenz X2 gebildet werden, die gleich oder gleichartig ist zur ersten Differenz X1, so dass entweder mit der ersten Differenz X1 oder der zweiten Differenz X2 jeweils ein genaues Maß für den Füllstand 4 des Mediums 3 in Behälter 2 bestimmt werden kann.

Für die Erfassung der Druckwerte des negativen Drucks oder Unterdrucks in der Sensoreinheit 9 infolge des Betriebs der Pumpe 5 oder auch der Betriebspausen ist es unerheblich, ob der Behälter 2 höher oder tiefer angeordnet ist als die Sensoreinheit 9 oder die Pumpe 5. Ist der Behälter 2 höher angeordnet als die Erfassungsvorrichtung 1 oder die Pumpe 5, dann begünstigt der durch das Medium 3 entstehende hydrostatische Druck die Entnahme des Mediums 3. Mit der Abnahme der Menge des Mediums 3 in dem Behälter 2 geht diese Unterstützung für die Entnahme des Mediums 3 zurück, so dass es erforderlich ist, dass die Pumpe 5 einen erhöhten Unterdruck bilden muss, um das (vorzugsweise viskose) Medium 3 in der vorstehend beschriebenen Weise zu fördern, wodurch das stufenweise Abfallen der Druckkennlinie K1 gemäß Fig. 3 entsprechend den Druckwerten P0 bis P6 oder den entsprechenden negativen Druckwerten A11, A12, A61, A62 in Verbindung mit dem Betrieb der Pumpe 5 auftritt. Der in der Darstellung abfallende Verlauf der Druckkennlinie K1 bedeutet ein betragsmäßiges Ansteigen des Unterdrucks infolge des Nachlassens der Unterstützung der Entnahme des Mediums 3 aus dem Behälter 2, wenn der Behälter 2 (der höher angeordnet ist als die Erfassungsvorrichtung 1 und die Pumpe 5) zyklisch weiter entleert wird.

Ist der Behälter 2 jedoch unterhalb der Erfassungsvorrichtung 1 und der Pumpe 5 angeordnet, dann ist es erforderlich, zum Ansaugen des Mediums 3 zum Entleeren des Behälters 2 einen erhöhten Unterdruck durch die Pumpe 5 zu erzeugen, so dass ebenfalls mit der weiteren Entleerung des Behälters 2 und einer Verminderung des hydrostatischen Drucks im Behälter 2 der negative Druck (Unterdruck) betragsmäßig ansteigt. Die Beträge der Druckwerte der sich in dieser geometrischen Situation ergebenden Druckkennlinien liegen in diesem Fall etwas höher.

In beiden Fällen wird die in Fig. 3 gezeigte Druckkennlinie K1 stufenweise abfallen, so dass in jedem Fall ungeachtet der Anordnung des Behälters 2 relativ zur Erfassungsvorrichtung 1 und der Pumpe 5 die erste Differenz X1 und/oder zweite Differenz X2 gebildet werden kann, woraus in Kenntnis der Maße und Ausführung (Form) des Behälters 2 auf den Füllstand 4 geschlossen werden kann.

Weist beispielsweise der Behälter 2 gerade bzw. ebene (senkrechte oder schräge) Seitenwände auf, so liegen im Wesentlichen lineare Verhältnisse vor, und die in der Darstellung gemäß Fig. 3 abfallende Druckkennlinie K1 ermöglicht die Bildung der ersten Differenz X1 und/oder der zweiten Differenz X2 zur Bestimmung des Füllstands 4, wobei eine lineare Interpolation zwischen dem vollständig gefüllten und vollständig entleerten Zustand des Behälters 2 möglich ist. Weist der Behälter 2 hingegen eine andere Form auf, so ist in Verbindung mit den Kenntnissen bezüglich der Form des Behälters 2 bei der Auswertung und Bestimmung von Zwischenwerten des Füllstands 4 ein Rechenaufwand erforderlich, um exakte Zwischenwerte zu erhalten.

In Fig. 3 sind die beiden Möglichkeiten der Differenz X2 aus entweder den unterschiedlichen Druckwerten A11 und A61 oder A12 und A62 dargestellt. Der Druckunterschied bzw. die Druckdifferenz zwischen den jeweiligen Werten A11 und A12 sowie A61 und A62 bezeichnet die pulsierende Druckänderung infolge des Betriebs der Pumpe 5, wobei diese Druckänderungen und insbesondere die Änderungen des Unterdrucks innerhalb der Sensoreinheit 9 entsprechend erfasst werden. Die Darstellung in Fig. 3 (sowie in der nachstehend noch beschriebenen Fig. 4) zeigt die in zeitlicher Hinsicht verdichteten Druckwechsel infolge des Pumpenbetriebs.

Fig. 4 zeigt eine weitere Druckkennlinie K2, die einen ähnlichen Aufbau aufweist wie die erste Druckkennlinie K1 gemäß Fig. 3. Die weitere Druckkennlinie K2 ist auf die gleiche Weise gebildet wie die erste Druckkennlinie K1 und stellt einen in der Sensoreinheit 9 erfassten oder ermittelten Druckverlauf über der Zeit dar. Es wird im Falle der weiteren Druckkennlinie K2 ebenfalls angenommen, dass das Medium 3 ein Medium mit mittlerer Viskosität (höher als diejenige von Wasser) und der Behälter 2 geometrisch über der Erfassungsvorrichtung 1 und der Pumpe 5 (und damit erhöht) angeordnet ist. In gleicher Weise wie in Fig. 3 bezeichnet in Fig. 4 die horizontale Achse die Zeit und die vertikale Achse einen Druck in Druckeinheiten (Pascal P in N/m² oder bar) oder in umgerechneten Einheiten einer Höhe beispielsweise einer Wassersäule (z. B. Millimeter Wassersäule), wobei letztere Werte mittels eines Umrechnungsfaktors in äquivalente Druckwerte umgerechnet werden können.

Im Zusammenhang mit dieser geometrischen Anordnung ist die weitere Druckkennlinie K2 teilweise im positiven Druckbereich und teilweise im negativen Druckbereich (somit im Unterdruckbereich). Die Teile der weiteren Druckkennlinie K2, die sich im positiven Druckbereich gemäß Fig. 4 befinden, bilden die Betriebspausen der Pumpe 5, d.h. die kürzeren oder längeren Zeiten, in denen die Pumpe 5 nicht betrieben wird. Die Anordnung des Behälters 2 über der Erfassungsvorrichtung 1 und der Pumpe 2 bewirkt, dass das Medium 3 mit mittlerer oder geringerer Viskosität einen hydrostatischen Druck bereits in den Leitungen 7 und der Sensoreinheit 9 bildet, so dass dieser hydrostatische Druck, der mit zunehmender Entleerung des Behälters 2 geringer wird, als positiver Druck an dem Drucksensor 11 der Sensoreinheit 9 erfassbar ist. Es tritt dieser hydrostatische Druck im Ruhezustand der Pumpe 5, d. h. in den Betriebspausen der Pumpe 5 auf.

Wird jedoch die Pumpe 5 betrieben und bewirkt die Pumpe 5 während des Betriebs ein Ansaugen und Weiterfördern des Mediums 3 aus dem Behälter 2 über die Leitung 7 durch die Sensoreinheit 9 (gemäß der Darstellung in Fig. 1), dann bedarf es infolge der Viskosität des Mediums 3 eines entsprechenden Unterdrucks, der sich als negativer Druck in der weiteren Druckkennlinie K2 während der Pumpvorgänge (während des Betriebs der Pumpe 5) zeigt und in entsprechender Weise durch die Sensoreinheit 9 der Erfassungsvorrichtung 1 erfasst wird.

In der Darstellung der weiteren Druckkennlinie K2 gemäß Fig. 4 (erfasste Druckwerte über der Zeit) bezeichnet ein zeitlicher Bereich B0 die anfänglichen Maßnahmen beispielsweise nach dem in Betrieb nehmen eines mit dem Medium 3 gefüllten Behälters, wie des Behälters 2, wobei die Pumpe 5 betrieben wird, damit ein Teil des Mediums 3 aus dem Behälter 2 entnommen wird und somit zu Anfang für einen Betrieb mit einer verlässlichen Druckerfassung die Leitung 7 und die Sensoreinheit 9 mit dem Medium 3 gefüllt werden.

In gleichartiger Weise wie bei der Darstellung der ersten Druckkennlinie K1 gemäß Fig. 3 bezeichnen Bereiche B1 bis B8 den üblichen erwünschten bzw. gesteuerten Betrieb der Pumpe 5 in intermittierender Weise, wobei die einzelnen zeitlichen Bereiche B1 bis B8 entsprechend der Darstellung in Fig. 4 eine unterschiedliche Zeitdauer aufweisen können. Es liegen in der Darstellung wieder die zeitlich verdichteten Druckwechsel vor, wie sie durch die Pumpe 5 während ihres Betriebs erzeugt werden und wie sie durch die Sensoreinheit 9 und den Drucksensor 11 erfasst werden.

Die weiteren Bereiche C1 bis C9 bezeichnen in gleichartiger Weise wie in Fig. 3 die Betriebspausen der Pumpe, d.h. die Bereiche C1 bis C9 sind zeitliche Bereiche, in denen die Pumpe 5 nicht betrieben wird. In jedem Fall erfolgt jedoch durch die Sensoreinheit 9 und den darin enthaltenen Drucksensor 11 eine kontinuierliche Druckerfassung zur Bildung der weiteren Druckkennlinie K2 gemäß Fig. 4 über die gesamte Zeit der Darstellung der weiteren Druckkennlinie K2, d. h. in zeitlichen Bereichen des Betriebs und außerhalb des Betriebs der Pumpe 5.

In einem Bereich B9 und C10 ist hinsichtlich des Betriebs der Pumpe 5 und der Erfassung der Druckwerte durch die Sensoreinheit 9 erkennbar, dass der Behälter 2 infolge der stufenweisen Entleerung nunmehr vollständig oder nahezu vollständig entleert ist, so dass im Wesentlichen durch die Pumpe 5 Luft angesaugt wird und somit die durch die Sensoreinheit 9 erfassbaren Druckwerte sich an den Wert Null annähern, da lediglich ein geringer Unterdruck infolge der Strömungswiderstände der Luft in der Leitung 7 und der Sensoreinheit 9 erfasst wird. Es wird danach die Pumpe 5 abgeschaltet.

Aus der weiteren Druckkennlinie K2 kann ebenfalls eine Information hinsichtlich des Füllstands 4 des Behälters 2 ausgehend von einem vollständig gefüllten Zustand bis zu einem vollständig entleerten Zustand bestimmt werden. In Abhängigkeit von der Art und der Form des Behälters 2 können auch in verlässlicher Weise Zwischenwerte interpoliert werden.

Zur Bestimmung einer Information aus der weiteren Druckkennlinie K2 gemäß Fig. 4 als Maß für den Füllstand des angeschlossenen Behälters 2 können in gleicher Weise wie gemäß Fig. 3 in Verbindung mit der ersten Druckkennlinie K1 entsprechende Druckdifferenzen von ermittelten Druckwerten (positive oder negative Druckwerte) verwendet werden. Dies ist ebenfalls in Fig. 4 veranschaulicht.

Zum einen kann die Mehrzahl der Druckwerte der jeweiligen Bereiche C1 bis C9 während der Betriebspausen der Pumpe 5 herangezogen werden, wobei die Differenz zwischen dem (im vorliegenden Fall positiven) Druckwert bei C1 (Anfangsdruckwert) und dem Druckwert bei C9 (Enddruckwert) eine erste Differenz D1 bezeichnet, die ein Maß für den Füllstand 4 des Mediums 3 im Behälter 2 ist. Es wird dabei davon ausgegangen, dass der durch die Sensoreinheit 9 ermittelte Druckwert bei C1 (Anfangsdruckwert) den vollständig gefüllten Behälter bezeichnet, während der durch die Sensoreinheit 9 ermittelte Druckwert bei C9 (Enddruckwert) den vollständig (oder mit Toleranzen nahezu vollständig) entleerten Behälter 2 bezeichnet. In Abhängigkeit von der Art des Behälters 2 und seiner geometrischen Form kann auf einfache Weise mittels einfacher Interpolation oder durch entsprechende Berechnung bei einer ungleichmäßigen Form des Behälters 2 ein Zwischenwert des Füllstands 4 ermittelt werden.

Eine gleichartige Füllstandinformation kann ebenfalls erhalten werden aus den oberen oder unteren Druckwerten (im vorliegenden Fall jeweils ermittelter negativer Druckwerte) der Betriebsbereiche der Pumpe 5, die in Fig. 4 mit B0 bis B8 (zeitliche Bereiche, Betrieb der Pumpe 5) bezeichnet sind. Unter Berücksichtigung der jeweils unteren ermittelten Druckwerte, beispielsweise der Druckwerte zu Beginn des Bereichs B1 und zum Ende des Bereichs B8 (entsprechender Anfangs- und Enddruckwert) kann eine Information als Maß für den gesamten Füllstand 4 des Behälters 2 sowie in Abhängigkeit von der Behälterform für die möglichen Zwischenwerte erhalten werden. Es ist dies als Differenz D2 in Fig. 4 bezeichnet. In gleicher Weise können die jeweiligen oberen Druckwerte der wechselnden Druckschwankungen bei dem Betrieb der Pumpe 5 (d. h. in den Bereichen B0 bis B8) für die Bestimmung einer Füllstandinformation herangezogen werden, wobei die sich ergebende Differenz zwischen den jeweiligen Anfangsdruckwert (bei B0) und dem Enddruckwert (bei B8) mit D3 in Fig. 4 bezeichnet ist. Bei einem homogenen Medium 3 und einem gleichförmigen Betrieb der Pumpe 5 (d. h. mit etwa gleicher Leistung) sind die Differenzen D2 und D3 ungefähr gleich.

Es wird in gleicher Weise wie bei dem Messvorgang gemäß Fig. 3 (erste Druckkennlinie K1) einerseits eine Druckerfassung bzw. eine Auswertung der erfassten Druckwerte der Bereiche C1 bis C9 durchgeführt, so dass die Auswertung eines während eines zumindest kurzen Ruhezustands ermittelten Druckwerts eine genaue Druckmessung ermöglicht, die von zufälligen Druckschwankungen nicht verfälscht wird. Hierzu dienen erneut die Betriebspausen der Pumpe 5, d.h. die Zeitbereiche C1 bis C9, in denen die Pumpe 5 nicht betrieben wird und somit keine Druckschwankungen verursachen kann. Die Druckerfassung anderseits während des Betriebs der Pumpe 5 (d. h. in den Bereichen B0 bis B8) führen etwa zu denselben genauen Ergebnissen, wobei mittels einer Erfassung speziell in den Bereichen B0 bis B8 gemäß Fig. 4 (und in gleicher Weise auch in den Bereichen A1 bis A6 gemäß Fig. 3) nachstehen noch beschriebene weitere Eigenschaften des betreffenden Mediums 3 bestimmt werden können.

Bei der vorstehenden Beschreibung des Zustandekommens und der Aussagen der ersten und zweiten Druckkennlinie K1 und K2 gemäß den Fig. 3 und 4 wurde die Möglichkeit beschrieben, aus verschiedenen Bereichen der jeweiligen Druckkennlinie K1 oder K2 eine Information als Maß für den Füllstand 4 des Behälters 2 zu erhalten, ausgehend beispielsweise vom vollständig gefüllten Zustand des Behälters 2 über mögliche Zwischenzustände bis zum vollständig entleerten Zustand. Neben dieser Information hinsichtlich des Füllstands 4 des Behälters 2 ist es ebenfalls möglich, eine Information hinsichtlich der Viskosität des Mediums 3 als weitere Eigenschaft zu erhalten.

Bei dem Medium 3 handelt es sich um eine Flüssigkeit mit einer mittleren oder größeren Viskosität, so dass es erforderlich ist, dass zum Fördern des Mediums 3 durch die Pumpe 5 zumindest zeitweilig durch die Pumpe 5 ein Unterdruck (negativer Druck) gebildet wird, damit das Medium 3 aus dem Behälter 2 über die Leitungen 7 und die Sensoreinheit 9 angesaugt und gefördert werden kann. Die Viskosität des Mediums 3 ist ferner von der Temperatur abhängig, so dass bei der Auswertung der ersten und zweiten Druckkennlinie K1 und K2 jeweils ein Erfassungsergebnis des Temperatursensors 10 herangezogen wird, so dass die Auswertung der ersten und zweiten Druckkennlinie K1 und K2 Temperatur-kompensiert erfolgt. Als Temperatur wird diejenige des Mediums 3 innerhalb der Sensoreinheit 9 herangezogen, da der Temperatursensor 10 die Temperatur des Mediums 3 in der Sensoreinheit 9 bzw. in der unmittelbaren Umgebung erfasst.

Bei bekannten Eigenschaften der Komponenten, wie beispielsweise der Form und des Inhalts des Behälters 2 sowie der Leistungsfähigkeit und insbesondere der Förderleistung der Pumpe 5 kann auf eine Änderung der Viskosität des Mediums 3 durch Auswertung der entsprechenden Messwerte (Temperatur-kompensierte Druckwerte, beispielsweise gemäß der ersten und/oder zweiten Druckkennlinie K1 oder K2) geschlossen werden. Ändert sich die Viskosität des Mediums 3 oder wird als Medium 3 eine andere Art des Mediums 3 mit unterschiedlicher Viskosität zu einem vorherigen Medium 3 verwendet, dann kann dies in Verbindung mit den zuvor gespeicherten Messwerten, die ein bestimmtes Medium 3 mit einer bestimmten Viskosität bezeichnen, ermittelt werden. Im Einzelnen kann aus einem Vergleich von Druckwerten bestimmt werden, ob sich die Viskosität verändert hat, wenn die Pumpe 5 eine vorbestimmte Zeitdauer betrieben wird und bestimmte Druckwerte erfasst werden. Für ein Medium 3 mit einer höheren Viskosität ist ein erhöhter Unterdruck erforderlich im Vergleich zu der Förderung eines Mediums 3 mit einer geringeren Viskosität (d.h. einem Medium 3, das dünnflüssiger ist).

Es kann auf diese Weise durch Auswertung von erfassten Druckkennlinien, wie beispielsweise der ersten und zweiten Druckkennlinie K1 und K2 vorzugsweise während und/oder auch außerhalb des Betriebs der Pumpe 5 ein (primär relatives) Maß für die Viskosität des geförderten Mediums ermittelt werden, so dass auch auf einfache Weise und ohne die Verwendung zusätzlicher Einrichtungen die Eigenschaften des Mediums 3 und somit auch in gewissem Umfang seine Qualität überwacht werden kann. Zu diesem Zweck können Druckwerte und vorzugsweise Druckkennlinien, die unter vorbestimmten Bedingungen ermittelt wurden, für einen nachfolgenden Vergleich mit jüngeren Druckkennlinien gespeichert werden. Voraussetzung hierfür ist die Kenntnis der Eigenschaften und Bauart der jeweils beteiligten Komponenten, wie des Behälters 2 und der Pumpe 5, ungeachtet dessen, dass die Art und Form des Behälters 2 nicht festgelegt ist, sofern sie bei der Anwendung und Auswertung der Druckkennlinien bekannt ist.

Im Ergebnis der vorstehenden Beschreibung der Erfassungsvorrichtung 1 ist es möglich, eine Information hinsichtlich der Eigenschaften des betreffenden Mediums 3 zu erhalten, und des Weiteren eine Information bezüglich des Füllstands 4 des Behälters 2, in dem sich das Medium 3 befindet und aus dem dieses entnommen wird. Es bedarf keiner zusätzlichen Einrichtungen innerhalb oder außerhalb des Behälters 2 zur Erfassung dieser Information oder Daten, so dass auf einfache Weise eine Erfassung grundlegender Daten mit der Erfassungsvorrichtung 1 gewährleistet ist. Mit der Erfassung einer Information bezüglich der Viskosität des Mediums 3 kann beispielsweise ermittelt werden, ob sich die Eigenschaften (z. B. die Qualität) des Mediums geändert hat, ob möglicherweise ein unpassendes oder ungeeignetes Medium verwendet wird oder sich das Medium unerwünscht verändert hat (z. B. durch Beimischungen, chemische und/oder physikalische Änderungen).

Während somit die Erfassung der Druckwerte zur Bildung der Druckkennlinien K1 oder K2 kontinuierlich während und außerhalb des Betriebs der Pumpe 5 erfolgt, betrifft die Auswertung eine getrennte Betrachtung der erfassten Druckwerte bzw. der entsprechenden Abschnitte der Druckkennlinien K1 und K2 in den jeweiligen Bereichen entweder während des Betriebs der Pumpe 5 (Bereiche A1 bis A6 und B0 bis B8) oder außerhalb des Betriebs der Pumpe 5 (Bereiche P0 bis P6 und C1 bis C9).

In dem in Fig. 1 gezeigten Prozesssystem P ist zur Förderung des Mediums 3 aus dem Behälter 2 zu dem Prozess 6 die Pumpe 5 erforderlich, so dass zur Gewinnung der gewünschten Daten (Kennlinien) lediglich die Erfassungsvorrichtung 1 in das Prozesssystem P eingesetzt ist. Die Erfassungsvorrichtung 1 ist somit in der Weise ausgebildet, dass sie in das Prozesssystem P einsetzbar ist. Die Steuerung der Erfassungsvorrichtung 1 bzw. der Sensoreinheit 9 mittels der Steuerungseinrichtung 8 erfolgt entsprechend den Fig. 3 und 4 im Zusammenhang mit der Ansteuerung der Pumpe 5, so dass in den Bereichen (Pausenzeiten) T1 bis T6 oder in den Bereichen C1 bis C9 jeweils verlässliche Messungen durchgeführt werden können, die nicht durch einen Betrieb der Pumpe 5 beeinflusst werden. Auch wird durch die Erfassung mittels der Sensoreinheit 9 der im Prozesssystem P ablaufende Prozess 6 (der somit einen übergeordneten Prozess darstellt) nicht beeinträchtigt oder gestört.

Die Betriebspausen der Pumpe 5 (Bereiche T0 bis T6; C0 bis C9) einerseits sowie die Zeiten eines Betriebs der Pumpe 5 (Bereiche A1 bis A6; B1 bis B8) andererseits stellen somit aus dem normalen und störungsfreien Betrieb des gesamten Prozesssystems P sich insgesamt ergebende Zeitfenster zur Durchführung der Messungen (Erfassungen) dar (Figuren 3 und 4). Weitere zusätzliche Bauteile oder Funktionskomponenten sind zur Erfassung des Füllstands 4 des Behälters 2 oder der weiteren Eigenschaften, wie der Viskosität des verwendeten Mediums 3, nicht erforderlich. Des Weiteren ist die relative Position des Behälters 2 bezüglich der Erfassungsvorrichtung 1 und der Pumpe 5 von geringerer Bedeutung, da dies lediglich die absoluten Werte der Erfassungssignale und daraus gebildeter Kennlinien beeinflusst. Der grundsätzliche Verlauf der Kennlinien, wie beispielsweise der ersten und zweiten Druckkennlinie K1 und K2 (Druckverlauf über der Zeit) der Figuren 3 und 4 bleibt im Wesentlichen erhalten, so dass die vorstehend beschriebene Auswertung im Hinblick auf interessierende Parameter des Mediums 3 und/oder im Zusammenhang mit dem Behälter 2 vorgenommen werden kann.

Die bereits in Verbindung mit der vorstehenden Beschreibung angegebenen Maßnahmen zum Verfahren werden nachstehend nochmals zusammengefasst.

Das Verfahren zur Erfassung von Eigenschaften des Mediums 3 oder des Füllstands des Mediums 3 in dem Behälter 2 geht aus von der vorstehend beschriebenen Vorrichtung gemäß den Figuren 1 und 2 und umfasst folgende Schritte: Intermittierendes Betreiben der Pumpe 5 mit einem Pumpenbetrieb und Betriebspausen (Schritt 1), beispielsweise zur Entnahme des Mediums aus dem Behälter, Erfassen der Druckwerte des Mediums 3 während des Pumpenbetriebs und in den Betriebspausen und Bereitstellen von Erfassungssignalen (Schritt 2), Bilden einer Druckkennlinie K1, K2 aus dem zeitlichen Verlauf der erfassten Druckwerte des Mediums 3 in der Sensoreinheit 9 (Schritt 3), und Auswerten der Druckkennlinien zur Bestimmung einer Information als Maß für den Füllstand des Mediums 3 in dem Behälter 2 aus den Druckwerten der jeweiligen Druckkennlinie während oder außerhalb des Betriebs der Pumpe 5 (Schritt 4). Die Verfahrensschritte werden durch die Steuerungseinrichtung 8 eingeleitet und gesteuert.

In Einzelnen erfolgt in Verbindung mit der Auswertung der Druckkennlinien K1 oder K2 das Bilden der vorstehend beschriebenen Differenzen X1, X2; D1, D2, D3 aus jeweiligen Druckwerten während oder außerhalb des Betriebs der Pumpe 5. Das Bilden der Differenzen erfolgt dabei aus jeweiligen Anfangs- und Enddruckwerten (beispielsweise P0, P6, A11, A12, A61, A62) während oder außerhalb des Betriebs der Pumpe 5. Es können einzelne Druckwerte erfasst werden, jedoch erfolgt vorzugsweise das kontinuierliche Erfassen der Druckwerte während und außerhalb des Betriebs der Pumpe 5, so dass eine vollständige jeweilige Kennlinie K1 oder K2 gebildet werden kann, die dann hinsichtlich einer Vielzahl von Aspekten und Parametern des Mediums 3 ausgewertet werden kann.

Gemäß den vorstehenden Angaben können die Erfassungsvorrichtung 1 und das Erfassungsverfahren bei einer Vielzahl von Behältern 2 angewendet werden, wobei die Anwendung der Erfindung keine Beschränkung durch die Art und Form des Behälters 2 erfährt. Es ist lediglich erforderlich, dass die Form und Ausführung des Behälters 2 bekannt ist, damit aus den Druckwerten (beispielsweise den Druckwerten P0 bis P6 gemäß Fig. 3) während der Betriebspausen der Pumpe 5 oder den Druckwerten während des Betriebs der Pumpe 5 eine als Maß für den Füllstand 4 dienende Information erhalten werden kann. Es kann ferner berücksichtigt werden, dass zumindest eine kleine Menge des Mediums 3 infolge seiner Viskosität an den Innenwänden der Leitungen 7, des Behälters 2 und der Sensoreinheit 9 anhaften kann, da die Viskosität größer ist als diejenige von Wasser, und vorzugsweise deutlich größer ist als diejenige von Wasser.

Unter erneuter Bezugnahme auf die Darstellung beispielsweise der Druckkennlinie K1 in Fig. 3 kann bei den Druckwerten P0 bis P6 eine Verbindungslinie zwischen diesen Druckwerten bei den Betriebspausen der Pumpe 5 approximiert werden, indem innerhalb des jeweiligen zugehörigen Bereichs T0 bis T6 (und bei längeren Zeitbereichen, beispielsweise bei dem Bereich T2 zu Anfang dieses Bereichs) die ermittelten Druckwerte P0 bis P6 miteinander mit einer Linie verbunden werden. Nachfolgend werden die daraus zu erhaltende Information und ihre Auswertung beschrieben.

Umfasst beispielsweise der Behälter 2 zur Aufnahme des Mediums 3 im Wesentlichen gerade bzw. ebene Wände und eine überwiegend regelmäßige Struktur, so ergeben sich ebenfalls im Wesentlichen gerade Linien bei der Verbindung der jeweiligen Druckwerte beispielsweise der Druckkennlinie K1 (und ebenfalls bei K2 gemäß Fig. 4), so dass auf einfache Weise Zwischenwerte hinsichtlich des zu ermittelnden Füllstands des Mediums 3 im Behälter 2 interpoliert werden können. Weist hingegen der Behälter 2 keine oder nur teilweise eine regelmäßige Struktur auf, sondern konische oder in sonstiger Weise schmaler werdende Bereiche oder ändert sich die Querschnittsfläche des Behälters 2 kontinuierlich oder an bestimmten Stellen im Behälter 2 in Stufen oder abrupt in Bezug auf die Gehäuseform infolge dreidimensional geformter Wände, und ändert sich damit die von dem Medium 3 eingenommene Querschnittsfläche ebenfalls abrupt, dann treten mehr oder weniger stark gekrümmte Linien auf (bei kontinuierlicher Änderung) oder es treten gerade Linien auf, die sich in einem spitzen Winkel treffen, sofern eine abrupte Änderung der Gehäuseform des Behälters 2 vorliegt. Die Auswertung der Erfassungssignale der Sensoreinheit 9 (bzw. der Druckwerte und Druckkennlinien K1 und K2) erfolgt somit in Kenntnis der Form des Behälters 2, d. h. seiner mechanischen Ausgestaltung und damit auch seines Rauminhalts.

Weist somit der Behälter 2 eine abrupte Änderung zumindest seiner inneren Form auf (abrupte Änderung in der Querschnittsfläche, meist im unteren Bereich des Behälters 2), dann können mit den vorstehend beschriebenen Verbindungslinien der Druckwerte P0 bis P6 der ersten Druckkennlinie K1 gemäß Fig. 3 oder der Druckwerte C1 bis C9 der zweiten Druckkennlinie K2 gemäß Fig. 4 zwei Geraden gebildet werden, die sich in einem spitzen Winkel bei dem Druckwert treffen, ab dem bei der weiteren Entnahme des Mediums 3 aus dem Behälter 2 der Füllstand 4 des Mediums unter den Bereich des Behälters 2 abgefallen ist, der die im Wesentlichen geraden (ebene) Wände aufweist und nun der konisch zusammenlaufende Teil des Behälters 2 mit der dadurch bedingten rascheren Abnahme des Mediums 3 bei sonst gleichartiger Entnahme beginnt.

Zur Veranschaulichung dieses Sachverhalts sind in Fig. 3 zwei Geraden eingezeichnet, eine erste Gerade G1, die die Punkte P0 bis P4 verbindet, und eine zweite Gerade G2, die die Druckwerte P4 bis P6 miteinander verbindet. Der Druckwert im Zusammenhang mit dem Zeitpunkt T7 kann nicht zu dieser Erfassung herangezogen werden, da in diesem Zustand der Behälter 2 bereits (oder nahezu) vollständig entleert ist und der Druck auf lediglich dem angesaugten Luftdruck durch die Leitungen 7 des Prozesssystems P zurück geht bzw. sich einem annähernden normalen Umgebungsdruck annähert, der dem äußeren Luftdruck entspricht, dem das Prozesssystem P ausgesetzt ist.

Es wird mittels einer Differentiation oder einem entsprechenden Algorithmus die jeweilige Steigung der in Verbindung mit den Druckwerten bei den Betriebspausen der Pumpe 5 der approximierten Geraden G1 und G2 bestimmt, und es wird hierbei der Knickpunkt der Geraden als abrupte Änderung der Steigung bzw. abrupten Änderung der Abnahme des Füllstands 4 im Behälter 2 ermittelt, wobei die zweite Gerade G2 bei etwa gleicher Entnahmemenge durch den Betrieb der Pumpe ein rascheres Absinken des Füllstands im Behälter 2 bezeichnet als die erste Gerade G1.

Es ist auf diese Weise möglich, die Erfassung des Füllstands des Mediums 3 in dem Behälter 2 derart zu ergänzen, dass mit dem Erkennen des Erreichens des Knickpunkts der Geraden G1 und G2 und damit des Erreichens eines Füllstands des Mediums 3 in dem Behälter 2 im Bereich der abrupten Änderung der Form des Behälters 2, ein Benutzer darauf hingewiesen werden kann, dass sich der Behälter 2 mit dem Medium 3 kurz vor der vollständigen Entleerung befindet. In diesem Fall kann durch die Auswertung mittels der Steuerungseinrichtung 8 rechtzeitig und vor der tatsächlichen vollständigen Entleerung des Behälters ein Alarmhinweis ausgegeben werden, dass in Kürze der Behälter 2 vollständig entleert sein wird.

Nach der vollständigen Entleerung, beispielsweise zum Zeitpunkt T7 (kurze Zeitdauer) in Fig. 3 kann die Pumpe 5 lediglich Luft durch die Sensoreinheit 9 und die Leitung 7 sowie durch den Behälter 2 ansaugen, so dass der dann verbleibende Druckwert nahe dem Druckwert Null ein Maß für die Strömungswiderstände der Luft in dem gesamten System darstellt, wobei auf diese Weise in Abhängigkeit von dem sich ergebenden geringen Restdruck (während des Betriebs der Pumpe 5 beim Ansaugen im Wesentlichen von Luft oder eines anderen im Prozesssystem P befindlichen Gases) erkannt werden kann, ob der Behälter 2 eine Druckausgleichseinrichtung aufweist, welcher Art die Druckausgleichseinrichtung ist und mit welchen Strömungswiderständen für die Luft die Druckausgleichseinrichtung des betreffenden Behälters 2 behaftet ist.

Es kann mit dieser Vorgehensweise bei einem bekannten und in der Steuerungseinrichtung 8 gespeicherten Strömungswiderstand eines bestimmten Behälters 2 und mit hierzu in Verbindung stehenden Druckkennlinien des betreffenden Mediums ermittelt werden, ob dieser oder ein Ersatzbehälter verwendet wird, beispielsweise ob ein fremder Ersatzbehälter anstelle eines Original-Ersatzbehälters eines bestimmten Herstellers mit einer mehr oder weniger anderen Form verwendet wird. Mittels der erfindungsgemäßen Anordnung der Erfassungsvorrichtung (umfassend zumindest die Sensoreinheit 9 und die Steuerungseinrichtung 8 gemäß dem ersten Ausführungsbeispiel) können somit umfangreiche Daten bezüglich des Mediums 3 sowie des Behälters 2 und dessen aktuellem Füllstand ermittelt werden, ohne dass zusätzliche Messzeiten oder zusätzliche Einrichtungen erforderlich sind. Es wird ferner der im Prozesssystem P laufende Prozess 6 nicht beeinträchtigt und insbesondere nicht in Bezug auf erforderliche Erfassungen verzögert.

### Zweites Ausführungsbeispiel

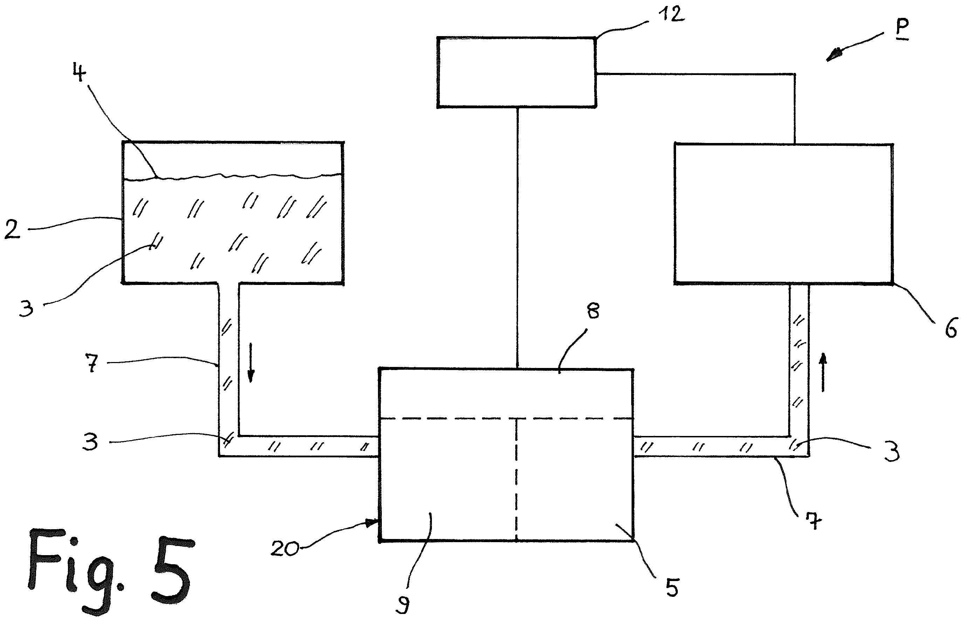

Fig. 5 zeigt ein zweites Ausführungsbeispiel der Erfassungsvorrichtung 20, wobei die Erfassungsvorrichtung 20 gemäß Fig. 5 in gleicher Weise wie in Fig. 1 in das Prozesssystem P eingesetzt ist. Die Erfassungsvorrichtung 20 befindet sich in diesem Fall zwischen dem Behälter 2, in dem das Medium 3 bevorratet wird, und dem Prozess 6, dem das Medium 3 über die Leitungen 7 (Rohre, Schläuche) zugeführt wird.

Im Gegensatz zur Anordnung gemäß Fig. 1 ist die Erfassungsvorrichtung 20 der zweiten Ausführungsform in der Weise aufgebaut, dass in Form einer Baueinheit, einer Baugruppe oder eines Moduls die Sensoreinheit 9 und die Pumpe 5 in einem Gehäuse zusammengefasst sind. Des Weiteren ist zur unmittelbaren Steuerung die Steuerungseinrichtung 8 vorgesehen, die ebenfalls Teil der Erfassungsvorrichtung 20 in Form eines Moduls ist. Das Modul der Erfassungsvorrichtung 20 ist somit in gleicher Weise wie die Erfassungsvorrichtung 1 gemäß Fig. 1 in das Prozesssystem P einsetzbar, wobei ferner die Möglichkeit besteht, eine Verbindung zu einer zentralen Datenverarbeitungseinrichtung 12 vorzusehen. Die zentrale Datenverarbeitungseinrichtung 12 (in Fig. 5: zentrale EDV) kann dabei Befehle an die Steuerungseinrichtung 8 des Moduls der Erfassungsvorrichtung 20 senden und des Weiteren Benutzeranweisungen umsetzen und auch den Prozess 6 beeinflussen. Der Prozess 6 entspricht dem allgemeinen Prozess 6 gemäß der Beschreibung in Verbindung mit der Anordnung gemäß Fig. 1.

Die Wirkungsweise der Erfassungsvorrichtung 20 in Form des in Fig. 5 gezeigten Moduls ist die gleiche, wie diejenige der Erfassungsvorrichtung 1 gemäß Fig. 1 in Verbindung mit der Pumpe 5, wobei die gleichen Vorteile erreicht und dieselben vorstehend beschriebenen Erfassungen und zugehörigen Auswertungen durchgeführt werden können. Mit der Anordnung gemäß Fig. 5 werden die weiteren Vorteile erreicht, dass die Erfassungsvorrichtung 20 (umfassend zumindest die Sensoreinheit 9, die Steuerungseinrichtung 8 sowie die Pumpe 5 gemäß dem zweiten Ausführungsbeispiel) in Form des Moduls als eine kompakte Einheit hergestellt werden kann, so dass des Weiteren eine einfache Montage und eine weitgehende Fertigung mit dem Ziel einer kompakten Ausführung gewährleistet ist.

Die Sensoreinrichtung 9 und die Pumpe 5 in dem Modul der Erfassungsvorrichtung 20 sind in gleicher Weise, wie es in Fig. 1 dargestellt ist, miteinander verbunden, so dass das von der Pumpe 5 angesaugte Medium 3 die Leitungen 7 und die Sensoreinrichtung 9 durchströmt und über die Pumpe 5 und weitere Leitungen 7 dem Prozess 6 zugeführt wird. Somit befindet sich ungeachtet dessen, dass die Sensoreinrichtung 9 und die Pumpe 5 gemeinsam in der Erfassungsvorrichtung 20 (d. h. in einem Gehäuse) angeordnet sind, hinsichtlich der Funktion die Sensoreinrichtung 9 in Bezug auf die Strömungsrichtung des Mediums 3 zwischen der Pumpe 5 und dem Behälter 2 und somit stromauf zur Pumpe 5. Die Pumpe 5 befindet sich relativ zu der Sensoreinrichtung 9 stromab in Strömungsrichtung des Mediums 3, so dass gleichartige Verhältnisse bereitgestellt werden, wie sie in Fig. 1 gezeigt sind. Es können zur Auswertung im Hinblick auf die Viskosität des Mediums 3 sowie den Füllstand 4 des Mediums 3 im Behälter 2 die gleichen oder gleichartigen Druckkennlinien aufgenommen werden, wie sie durch die erste und zweite Druckkennlinie K1 und K2 gemäß den Fig. 3 und 4 dargestellt und beschrieben sind.

### Abwandlungen des ersten und zweiten Ausführungsbeispiels

In der Darstellung gemäß Fig. 2 ist in vereinfachter und schematischer Weise die Sensoreinheit 9 gezeigt, wobei die Sensoreinheit 9 als Beispiel im Wesentlichen zwei Sensorelemente aufweist, zum einen den Temperatursensor 10 sowie zum anderen den Drucksensor 11. Es wird mit der in Fig. 2 dargestellten Sensoreinheit 9 eine Information hinsichtlich der Temperatur des Mediums 3 sowie des Drucks des Mediums 3 (positiver oder negativer Druck) innerhalb der Sensoreinheit 9 bestimmt.

Die Sensoreinheit 9 weist jedoch entsprechend einer weiteren Ausgestaltung der vorliegenden Erfindung weitere Sensorelemente auf, die zur Vereinfachung in Fig. 2 nicht gezeigt sind.

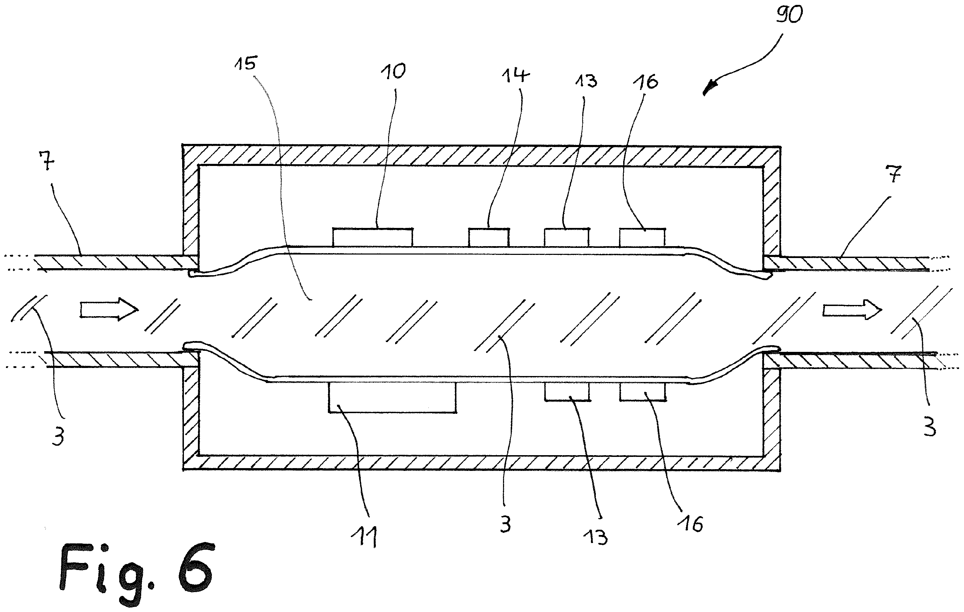

Fig. 6 zeigt in diesem Zusammenhang eine abgewandelte Ausführungsform der Sensoreinheit 9 in Form der Sensoreinheit 90, wobei die Sensoreinheit 90 neben dem Temperatursensor 10 und dem Drucksensor 11 des Weiteren beispielsweise einen Trübungssensor 13 aufweist, der zur Erfassung beispielsweise einer Dichte oder eines Verschmutzungsgrads des Mediums 3 dient. Der Trübungssensor 13 kann beispielsweise als ein optischer Sensor ausgebildet sein. Er wird mittels der Steuerungseinrichtung 8 angesteuert und kann einander gegenüberliegende Elemente aufweisen, durch die ein Licht gesendet wird, wobei eine einfallende Lichtmenge ein Maß für eine bestimmte Dichte oder Trübung des Mediums 3 darstellt.

Die Sensoreinheit 90 kann des Weiteren einen Leitwertsensor 14 aufweisen, mittels dessen die elektrische Leitfähigkeit des die Sensoreinheit 90 durchströmenden Mediums 3 erfasst wird. Das Medium 3 befindet sich innerhalb der Sensoreinheit 90 in einem Messraum 15, der vollständig oder nahezu vollständig mit dem Medium 3 gefüllt ist, so dass der Leitwertsensor 14 unmittelbar in Kontakt mit dem Medium 3 steht. Mittels des Leitwertsensors 14 kann über die erfasste Leitfähigkeit des Mediums 3 eine Aussage über dessen Beschaffenheit oder Veränderungen der Beschaffenheit getroffen werden. Die Anwendung des Leitfähigkeitssensors 14 ist bei einem elektrisch leitfähigen Medium möglich.

Die Sensoreinheit 90 kann des Weiteren ein kapazitives Sensorelement 16 aufweisen, mittels dessen in Verbindung mit einer Impedanzspektroskopie physikalische und chemische Eigenschaften des in dem Messraum 15 angeordneten Mediums 3 erfasst werden können. Hierbei werden durch das kapazitive Sensorelement 16 speziell die dielektrischen Eigenschaften des Mediums 3 erfasst, indem an die einander gegenüberliegenden Teile des kapazitiven Sensorelements 16 Wechselspannungssignale mit unterschiedlicher Frequenz oder verschiedenen Frequenzbereichen angelegt werden. In Abhängigkeit von zuvor ermittelten Referenzwerten kann auf Eigenschaften des Mediums 3 oder sich ändernder Eigenschaften genau geschlossen werden.

In Fig. 6 ist mittels entsprechender Pfeile eine bevorzugte Strömungsrichtung des Mediums 3 eingezeichnet, wobei die Strömung des Mediums 3 durch die in der Darstellung gemäß Fig. 6 auf der rechten Seite angeordnete und in Fig. 6 nicht gezeigte Pumpe 5 bewirkt wird. Ferner ist die Darstellung in Fig. 6 vereinfacht und schematisch. Die Erfindung ist auf die dargestellte Anordnung und Positionierung sowie die Anzahl und Ausführung der einzelnen Sensorelemente in den Sensoreinrichtungen 9 und 90 nicht festgelegt.

Mittels der Sensoreinheit 90 in Form eines Multisensors mit einer Vielzahl von unterschiedlichen Sensorelementen besteht die Möglichkeit, ohne einen zusätzlichen technischen Aufwand und lediglich mit der Anordnung der betreffenden oder erwünschten (erforderlichen) Sensorelemente in der Sensoreinheit 90 umfassende Daten hinsichtlich des betreffenden Mediums 3 zu erhalten. Die Sensoreinheit 90 gemäß Fig. 6 kann Teil der Erfassungseinrichtung 1 gemäß der ersten Ausführungsform oder Teil der Erfassungseinrichtung 20 gemäß der zweiten Ausführungsform sein. Es kann ebenfalls berücksichtigt werden, dass zumindest eine kleine Menge des Mediums 3 infolge seiner Viskosität an den Innenwänden der Leitungen 7, des Behälters 2 und der Sensoreinheit 9 anhaften kann.

In jedem Fall ist es nicht erforderlich, zur Gewinnung der wünschten Daten entsprechende Einrichtungen in dem Behälter 2 vorzusehen, so dass vorteilhaft gemäß der vorliegenden Erfindung der Behälter 2 ein Standardbehälter sein kann, oder auch ein Behälter mit relativ einfacher Ausstattung, so dass auf Sensoreinrichtungen in dem Behälter 2 verzichtet werden kann. Mit der Möglichkeit, dass die Erfassungsvorrichtung 1 oder 90 gemäß dem ersten oder zweiten Ausführungsbeispiel in das Prozesssystem P einsetzbar ist, ohne das Prozesssystem selbst zu beeinflussen oder gar zu stören, besteht die Möglichkeit, auf einfache Weise innerhalb des Prozesssystems P und mit einem vergleichsweise geringen technischen Aufwand die erforderlichen Daten zu gewinnen. Spezielle Ausführungen des jeweiligen Behälters 2 zur Bevorratung des Mediums 3 und vor der Auswertung von Erfassungsergebnissen die Bereitstellung spezieller Erfassungszeiten sind nicht erforderlich. Vielmehr erfolgen sämtliche Erfassungen begleitend zu dem Prozess 6.

Die vorliegende Erfindung wurde vorstehend anhand von Ausführungsbeispielen und Abwandlungen derselben beschrieben. Die Erfindung ist nicht auf die Darstellung und insbesondere nicht auf die in den Figuren gezeigten Anordnungen und Proportionen festgelegt. Vielmehr werden als zur Erfindung gehörig sämtliche Ausführungsformen und Varianten angesehen, die unter die beigefügten Patentansprüche fallen.

## Patentansprüche

1. Erfassungsvorrichtung zur Erfassung von Eigenschaften eines Mediums (3) oder des Füllstands des Mediums (3) in einem Behälter (2), mit
- einer von dem Medium (3) durchströmten Sensoreinheit (9) mit zumindest einem Drucksensor (11) zur Erfassung von Druckwerten des Mediums (3) in der Sensoreinheit (9) und zur Abgabe eines Erfassungssignals, und
- einer Steuerungseinrichtung (8), die ausgebildet ist zur Aufnahme des Erfassungssignals der Sensoreinheit (9) und zur Bildung von Druckkennlinien (K1, K2) des ermittelnden Druckverlaufs in der Sensoreinheit (9), wobei
- die Sensoreinheit (9) in ein Prozesssystem (P) einsetzbar ist, in dem sich das Medium (3) befindet, und das Prozesssystem (P) zumindest den Behälter (2) zur Aufnahme des Mediums (3) sowie eine Pumpe (5) aufweist, die intermittierend betrieben wird, zur Entnahme des Mediums (3) aus dem Behälter (2),
- die Sensoreinheit (9) zwischen dem Behälter (2) und der Pumpe (5) einsetzbar ist, und wobei
- der ermittelte Druckverlauf Druckwerte des Mediums (3) in der Sensoreinheit (9) während des Betriebs der Pumpe (5) und außerhalb des Betriebs der Pumpe (5) umfasst.

2. Erfassungsvorrichtung zur Erfassung von Eigenschaften eines Mediums (3) oder des Füllstands des Mediums (3) in einem Behälter (2), mit
- einer von dem Medium (3) durchströmten Sensoreinheit (9) mit zumindest einem Drucksensor (11) zur Erfassung von Druckwerten des Mediums (3) in der Sensoreinheit (9) und zur Abgabe eines Erfassungssignals,
- einer Steuerungseinrichtung (8), die ausgebildet ist zur Aufnahme des Erfassungssignals der Sensoreinheit (9) und zur Bildung von Druckkennlinien (K1, K2) des ermittelnden Druckverlaufs in der Sensoreinheit (9), und
- einer Pumpe (5), die intermittierend betrieben wird, zur Entnahme des Mediums (3) aus dem Behälter (2), wobei
- die Erfassungsvorrichtung (1) in ein Prozesssystem (6) einsetzbar ist, in dem sich das Medium (3) befindet, und das Prozesssystem (P) zumindest den Behälter (2) aufweist zur Aufnahme des Mediums (3), so dass
- die Erfassungsvorrichtung (1) in Bezug auf die Strömungsrichtung des Mediums (3) im Prozesssystem (P) stromab des Behälters (2) angeordnet ist und sich die Sensoreinheit (9) zwischen der Pumpe (5) und dem Behälter (2) befindet, und
wobei
der ermittelte Druckverlauf Druckwerte des Mediums (3) in der Sensoreinheit (9) während des Betriebs der Pumpe (5) und außerhalb des Betriebs der Pumpe (5) umfasst.

3. Erfassungsvorrichtung nach Anspruch 1 oder 2, wobei die Steuerungseinrichtung (8) eine Einrichtung aufweist zur Auswertung des Druckverlaufs des Mediums (3) innerhalb der Sensoreinheit (9), und zur Bestimmung einer Information als Maß für den Füllstand (4) des Mediums (3) in dem Behälter (2) aus den Druckwerten des ermittelten Druckverlaufs während oder außerhalb des Betriebs der Pumpe (5).

4. Erfassungsvorrichtung nach einem der Ansprüche 1 bis 3, wobei die Sensoreinheit (9) des Weiteren einen Temperatursensor (10) aufweist zur Erfassung der Temperatur des Mediums (3) in der Sensoreinheit (9), und wobei das Medium (3) ein viskoses Medium mit einer Viskosität größer als diejenige von Wasser ist, und wobei die Erfassungsvorrichtung (1) in Leitungen (7) des Prozesssystems (P) einsetzbar ist

5. Verfahren zur Erfassung von Eigenschaften eines Mediums (3) oder des Füllstands des Mediums (3) in einem Behälter (2), wobei eine von dem Medium (3) durchströmte Sensoreinheit (9) mit zumindest einem Drucksensor (11) zur Erfassung von Druckwerten des Mediums (3) in der Sensoreinheit (9) und zur Abgabe eines Erfassungssignals, und eine Pumpe (5) zur Entnahme des Mediums (3) aus dem Behälter (2) vorhanden sind, und
wobei das Verfahren umfasst:
- intermittierendes Betreiben der Pumpe (5) mit einem Pumpenbetrieb und Betriebspausen (Schritt 1),
- Erfassen der Druckwerte des Mediums (3) während des Pumpenbetriebs und in den Betriebspausen und Bereitstellen von Erfassungssignalen (Schritt 2),
- Bilden einer Druckkennlinie (K1; K2) aus dem zeitlichen Verlauf der erfassten Druckwerte des Mediums (3) in der Sensoreinheit (9) (Schritt 3), und
- Auswerten der Druckkennlinien (K1; K2) zur Bestimmung einer Information als Maß für den Füllstand des Mediums (3) in dem Behälter (2) aus den Druckwerten der Druckkennlinie (K1; K2) während oder außerhalb des Betriebs der Pumpe (5) (Schritt 4).

6. Verfahren nach Anspruch 5, wobei der Schritt des Auswertens der Druckkennlinie (K1; K2) das Bilden von Differenzen (X1, X2; D1, D2, D3) aus jeweiligen Druckwerten während oder außerhalb des Betriebs der Pumpe (5) umfasst.

7. Verfahren nach Anspruch 5, wobei der Schritt des Auswertens der Druckkennlinie (K1; K2) zur Bestimmung der Information als Maß für den Füllstand des Mediums (3) im Behälter (2) das Bilden von Differenzen (X1, X2; D1, D2, D3) aus jeweiligen Anfangs- und Enddruckwerten (P0, P6, A11, A12, A61, A62) während oder außerhalb des Betriebs der Pumpe (5) umfasst.

8. Verfahren nach Anspruch 5, wobei der Schritt des Erfassens der Druckwerte des Mediums (3) im Behälter (2) durch die Sensoreinheit (9) das kontinuierliche Erfassen der Druckwerte während und außerhalb des Betriebs der Pumpe (5) umfasst.

## Claims

1. Detection device for detecting properties of a medium (3) or the filling level of the medium (3) in a vessel (2), having
- a sensor unit (9) through which the medium (3) flows, having at least one pressure sensor (11) for detecting pressure values of the medium (3) in the sensor unit (9) and for outputting a detection signal, and
- a control device (8) which is configured to receive the detection signal of the sensor unit (9) and to form pressure characteristic curves (K1, K2) of the determined pressure course in the sensor unit (9), wherein
- the sensor unit (9) can be inserted into a process system (P) in which the medium (3) is located, and the process system (P) has at least the vessel (2) for receiving the medium (3) as well as a pump (5), which is intermittently operated, for removing the medium (3) from the vessel (2),
- the sensor unit (9) can be inserted between the vessel (2) and the pump (5), and wherein
- the determined pressure course comprises pressure values of the medium (3) in the sensor unit (9) during operation of the pump (5) and outside operation of the pump (5).

2. Detection device for detecting properties of a medium (3) or the filling level of the medium (3) in a vessel (2), having
- an sensor unit (9) through which the medium (3) flows, having at least one pressure sensor (11) for detecting pressure values of the medium (3) in the sensor unit (9) and for outputting a detection signal,
- a control device (8) which is configured to receive the detection signal of the sensor unit (9) and to form pressure characteristic curves (K1, K2) of the determined pressure course in the sensor unit (9), and
- a pump (5), which is intermittently operated, for removing the medium (3) from the vessel (2), wherein
- the detection device (1) can be inserted into a process system (6) in which the medium (3) is located, and the process system (P) has at least the vessel (2) for receiving the medium (3), so that
- the detection device (1) is arranged in the process system (P) downstream of the vessel (2) with respect to the flow direction of the medium (3), and the sensor unit (9) is located between the pump (5) and the vessel (2), and wherein
- the determined pressure course comprises pressure values of the medium (3) in the sensor unit (9) during operation of the pump (5) and outside operation of the pump (5).

3. Detection device according to claim 1 or 2, wherein the control device (8) has a device for evaluating the pressure course of the medium (3) within the sensor unit (9), and for determining information as a measure of the filling level (4) of the medium (3) in the vessel (2) from the pressure values of the determined pressure course during or outside the operation of the pump (5).

4. Detection device according to one of claims 1 to 3, wherein the sensor unit (9) further comprises a temperature sensor (10) for detecting the temperature of the medium (3) in the sensor unit (9), and wherein the medium (3) is a viscous medium having a viscosity greater than that of water, and wherein the detection device (1) can be inserted into conduits (7) of the process system (P).

5. Method for detecting properties of a medium (3) or the filling level of the medium (3) in a vessel (2), wherein a sensor unit (9) through which the medium (3) flows and having at least one pressure sensor (11) for detecting pressure values of the medium (3) in the sensor unit (9) and for outputting a detection signal and a pump (5) for removing the medium (3) from the vessel (2) are present, and wherein the process comprises:
- intermittently operating the pump (5) with a pumping operation and operation breaks (step 1),
- detecting the pressure values of the medium (3) during the pumping operation and in the operation breaks and providing detection signals (step 2),
- forming a pressure characteristic curve (K1; K2) from the time course of the detected pressure values of the medium (3) in the sensor unit (9) (step 3), and
- evaluating the pressure characteristic curves (K1; K2) to determine information as a measure of the filling level of the medium (3) in the vessel (2) from the pressure values of the pressure characteristic curve (K1; K2) during or outside the operation of the pump (5) (step 4).

6. Method according to claim 5, wherein the step of evaluating the pressure characteristic curve (K1; K2) comprises forming differences (X1, X2; D1, D2, D3) from respective pressure values during or outside the operation of the pump (5).

7. Method according to claim 5, wherein the step of evaluating the pressure characteristic curve (K1; K2) to determine the information as a measure of the filling level of the medium (3) in the vessel (2) comprises forming differences (X1, X2; D1, D2, D3) from respective initial and final pressure values (P0, P6, A11, A12, A61, A62) during or outside the operation of the pump (5).

8. Method according to claim 5, wherein the step of detecting the pressure values of the medium (3) in the vessel (2) by the sensor unit (9) comprises continuously detecting the pressure values during and outside the operation of the pump (5).

## Revendications

1. Dispositif de détection pour la détection de propriétés d'un milieu (3) ou du niveau de remplissage du milieu (3) dans un récipient (2), avec
- une unité de capteur (9) traversée par le milieu (3) avec au moins un capteur de pression (11) pour la détection de valeurs de pression du milieu (3) dans l'unité de capteur (9) et pour la délivrance d'un signal de détection, et
- une unité de commande (8), qui est agencée pour la réception du signal de détection de l'unité de capteur (9) et pour la formation de lignes caractéristiques de pression (K1, K2) de l'allure de la pression déterminée dans l'unité de capteur (9), où
- l'unité de capteur (9) peut être disposée dans un système de traitement (P) dans lequel se trouve le milieu (3), et le système de traitement (P) présente au moins le récipient (2) pour la réception du milieu (3) ainsi qu'une pompe (5) qui est actionnée de manière intermittente, pour le retrait du milieu (3) du récipient (2),
- l'unité de capteur (9) peut être disposée entre le récipient (2) et la pompe (5), et où
- l'allure de la pression déterminée comprend des valeurs de pression du milieu (3) dans l'unité de capteur (9) pendant l'actionnement de la pompe (5) et en dehors de l'actionnement de la pompe (5).

2. Dispositif de détection pour la détection de propriétés d'un milieu (3) ou du niveau de remplissage du milieu (3) dans un récipient (2), avec
- une unité de capteur (9) traversée par le milieu (3) avec au moins un capteur de pression (11) pour la détection de valeurs de pression du milieu (3) dans l'unité de capteur (9) et pour la délivrance d'un signal de détection,
- une unité de commande (8), qui est agencée pour la réception du signal de détection de l'unité de capteur (9) et pour la formation de lignes caractéristiques de pression (K1, K2) de l'allure de la pression déterminée dans l'unité de capteur (9), et
- une pompe (5) qui est actionnée de manière intermittente, pour le retrait du milieu (3) du récipient (2), où
- le dispositif de détection (1) peut être disposé dans un système de traitement (6) dans lequel se trouve le milieu (3), et le système de traitement (P) présente au moins le récipient (2) pour la réception du milieu (3), de sorte que
- le dispositif de détection (1) est agencé par rapport à la direction d'écoulement du milieu (3) dans le système de traitement (P) en aval du récipient (2) et l'unité de capteur (9) se trouve entre la pompe (5) et le récipient (2), et où
l'allure de la pression déterminée comprend des valeurs de pression du milieu (3) dans l'unité de capteur (9) pendant l'actionnement de la pompe (5) et en dehors de l'actionnement de la pompe (5).

3. Dispositif de détection selon la revendication 1 ou 2, où le dispositif de commande (8) présente un dispositif pour l'évaluation de l'allure de la pression du milieu (3) à l'intérieur de l'unité de capteur (9), et pour la détermination d'une information comme mesure pour le niveau de remplissage (4) du milieu (3) dans le récipient (2) d'après les valeurs de pression de l'allure de la pression déterminée pendant ou en dehors de l'actionnement de la pompe (5).

4. Dispositif de détection selon l'une des revendications 1 à 3, où l'unité de capteur (9) présente en outre un capteur de température (10) pour la détection de la température du milieu (3) dans l'unité de capteur (9), et où le milieu (3) est un milieu visqueux avec une viscosité plus grande que celle de l'eau, et où le dispositif de détection (1) peut être disposé dans des conduites (7) du système de traitement (P).

5. Procédé pour la détection de propriétés d'un milieu (3) ou du niveau de remplissage du milieu (3) dans un récipient (2), où une unité de capteur (9) traversée par le milieu (3) avec au moins un capteur de pression (11) pour la détection de valeurs de pression du milieu (3) dans l'unité de capteur (9) et pour la délivrance d'un signal de détection, et une pompe (5) pour le retrait du milieu (3) du récipient (2) sont présentes, et où le procédé comprend :
- l'actionnement intermittent de la pompe (5) avec un actionnement de la pompe et des pauses d'actionnement (étape 1),
- la détection des valeurs de pression du milieu (3) pendant l'actionnement de la pompe et dans les pauses d'actionnement et la fourniture de signaux de détection (étape 2) ;
- la formation d'une ligne caractéristique de pression (K1 ; K2) à partir de l'allure temporelle des valeurs de pression du milieu (3) détectées dans l'unité de capteur (9) (étape 3), et
- l'évaluation des lignes caractéristiques de pression (K1 ; K2) pour la détermination d'une information comme mesure pour le niveau de remplissage du milieu (3) dans le récipient (2) à partir des valeurs de pression de la ligne caractéristique de pression (K1 ; K2) pendant ou en dehors de l'actionnement de la pompe (5) (étape 4).

6. Procédé selon la revendication 5, où l'étape d'évaluation de la ligne caractéristique de pression (K1 ; K2) comprend la formation de différences (X1, X2 ; D1, D2, D3) à partir de valeurs de pression respectives pendant ou en dehors de l'actionnement de la pompe (5).

7. Procédé selon la revendication 5, où l'étape d'évaluation de la ligne caractéristique de pression (K1 ; K2) pour la détermination de l'information comme mesure pour le niveau de remplissage du milieu (3) dans le récipient (2) comprend la formation de différences (X1, X2 ; D1, D2, D3) à partir de valeurs de pression initiales et finales (P0, P6, A11, A12, A61, A62) respectives pendant ou en dehors de l'actionnement de la pompe (5).

8. Procédé selon la revendication 5, où l'étape de détection des valeurs de pression du milieu (3) dans le récipient (2) par l'unité de capteur (9) comprend la détection continue des valeurs de pression pendant et en dehors de l'actionnement de la pompe (5).
